(19) **Europäisches Patentamt / European Patent Office / Office européen des brevets**

(11) **EP 2 066 944 B1**

(12) **FASCICULE DE BREVET EUROPEEN**

(45) Date de publication et mention
de la délivrance du brevet:
**23.02.2011 Bulletin 2011/08**

(21) Numéro de dépôt: **07848328.6**

(22) Date de dépôt: **18.09.2007**

(51) Int Cl.:
***F16L 1/16*** *(2006.01)*     ***F16L 13/02*** *(2006.01)*

(86) Numéro de dépôt international:
**PCT/FR2007/051955**

(87) Numéro de publication internationale:
**WO 2008/037907 (03.04.2008 Gazette 2008/14)**

(54) **PROCEDE DE REALISATION DE CONDUITE SOUS-MARINE COMPRENANT DES SOUDAGES ET CHEMISAGES ANTI CORROSION**

VERFAHREN ZUR HERSTELLUNG EINES UNTERWASSERROHRS MIT KORROSIONSFESTEN NÄHTEN UND VERKLEIDUNGEN

PROCESS FOR PRODUCING A SUBMARINE PIPE, COMPRISING CORROSION-RESISTANT WELDS AND LINERS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **27.09.2006 FR 0653972**

(43) Date de publication de la demande:
**10.06.2009 Bulletin 2009/24**

(73) Titulaire: **Saipem SA
78180 Montigny-le-Bretonneux (FR)**

(72) Inventeur: **ROCHER, Xavier
78400 Chatou (FR)**

(74) Mandataire: **Domange, Maxime et al
Cabinet Beau de Lomenie
232, avenue du Prado
13295 Marseille Cedex 08 (FR)**

(56) Documents cités:
**FR-A1- 2 564 938    FR-A1- 2 876 773
US-A1- 2002 038 954    US-B1- 6 179 523**

## Description

La présente invention concerne un procédé de réalisation de conduites sous-marines destinées à véhiculer des fluides corrosifs et notamment de l'eau, comprenant l'assemblage par soudage d'éléments unitaires de conduite.

De telles conduites sont décrites dans US 6 179 523 B1 ou FR 2 564 938 A1.

La présente invention concerne plus particulièrement une installation de liaison fond-surface comprenant au moins une conduite sous-marine assurant la liaison entre un support flottant et le fond de la mer notamment à grande profondeur. Ces conduites sous-marines sont appelées "colonnes montantes" ou "risers" comme explicité ci-après, ces risers étant constitués d'éléments tubulaires unitaires soudés entre eux bout à bout réalisés en acier.

Plus particulièrement, la présente invention a pour objet une conduite sous-marine du type riser assurant la liaison entre un support flottant et le fond de la mer, ledit riser étant constitué par une conduite rigide de type caténaire s'étendant depuis ledit support flottant jusqu'à un point de contact au fond de la mer.

Le secteur technique de l'invention est donc le domaine de la fabrication et de l'installation de liaisons fond-surface de production pour l'extraction sous-marine de pétrole, de gaz ou autre matériau soluble ou fusible, ou d'une suspension de matière minérale, à partir de tête de puits immergé pour le développement de champs de production installés en pleine mer au large des côtes. L'application principale et immédiate de l'invention étant dans le domaine de la production pétrolière, ainsi que dans la ré-injection d'eau et la production ou ré-injection de gaz.

Un support flottant comporte en général des moyens d'ancrage pour rester en position malgré les effets des courants, des vents et de la houle. Il comporte aussi en général des moyens de forage, de stockage et de traitement du pétrole ainsi que des moyens de déchargement vers des pétroliers enleveurs, ces derniers se présentant à intervalle régulier pour effectuer l'enlèvement de la production. L'appellation de ces supports flottants est le terme anglo-saxon "Floating Production Storage Offloading" (signifiant "moyen flottant de stockage, de production et de déchargement") dont on utilisera le terme abrégé "FPSO" dans l'ensemble de la description suivante, ou encore "FDPU" ou "Floating Drilling& Production Unit" (signifiant "moyen flottant de forage et de production"), lorsque le support flottant est aussi utilisé pour effectuer les opérations de forage avec puits dévié dans la hauteur de la tranche d'eau.

Un riser selon l'invention peut être soit un "riser de production" de pétrole brut ou de gaz, soit un riser d'injection d'eau, assurant la liaison avec une conduite sous-marine reposant au fond de la mer, soit encore un "riser de forage" assurant la liaison entre le support flottant et une tête de puits localisée au fond de la mer.

Dans les FPSO où l'on installe en général une multiplicité de lignes, on est amené à mettre en oeuvre soit des liaisons fond-surface de type tour-hybride, soit des liaisons de type caténaire en forme de"chaînette".

Lorsque la conduite de liaison fond-surface est du type caténaire , elle assure directement la liaison entre un support flottant et un point de contact au fond de la mer qui se trouve décalé par rapport à l'axe dudit support, ladite conduite prend de par son propre poids une configuration dite de "chaînette"; formant une courbe dont le rayon de courbure diminue depuis la surface jusqu'au point de contact au fond de la mer, et l'axe de ladite conduite forme un angle $\alpha$ avec la verticale dont la valeur varie en général de 10 à 20 degrés au niveau du support flottant jusqu'à, théoriquement, 90 degrés au niveau du fond de la mer correspondant à une position théorique sensiblement tangentielle à l'horizontale comme il sera explicité ci-après.

Les liaisons de type chaînette sont en général réalisées à l'aide de conduites flexibles, mais leur coût est extrêmement élevé en raison de structure complexe de la conduite.

Ainsi on a été amené à développer des colonnes montantes sensiblement verticales, de manière à rapprocher de la surface la liaison souple en configuration de chaînette vers le support flottant, ce qui permet de minimiser la longueur de ladite conduite flexible, ainsi que les efforts qui lui sont appliqués, minimisant ainsi considérablement son coût.

De plus, dans le cas de la production de pétrole, ledit pétrole brut cheminant sur de très grandes distances, plusieurs kilomètres, on cherche à leur fournir un niveau d'isolation extrême pour, d'une part minimiser l'augmentation de viscosité qui conduirait à une réduction de la production horaire des puits, et d'autre part éviter le blocage du flot par dépôt de paraffine, ou formation d'hydrates dès lors que la température descend aux alentours de 30-40°C. Ces derniers phénomènes sont d'autant plus critiques, particulièrement en Afrique de l'Ouest, que la température du fond de la mer est de l'ordre de 4°C et que les pétroles bruts sont de type paraffiniques.

Dès lors que la profondeur d'eau atteint et dépasse 800-1000m, il devient possible de réaliser ladite liaison fond-surface à l'aide d'une conduite rigide à paroi épaisse, car la longueur de la conduite étant considérable, sa souplesse permet d'obtenir une configuration de chaînette satisfaisante en restant dans des limites de contraintes acceptables.

Ces risers rigides en matériaux résistants de forte épaisseur, en configuration de chaînette, sont communément appelés par le terme anglo-saxon "Steel Catenary Riser" signifiant "riser en acier en forme de chaînette" dont on utilisera le terme abrégé "SCR" ou "riser caténaire" dans la présente description qu'il soit en acier ou en autre matériau tel qu'un matériau composite.

Ces "SCR" ou "risers caténaires" sont beaucoup plus simples à réaliser que les conduites flexibles et donc moins onéreux.

La courbe géométrique formée par une conduite de poids uniforme en suspension soumise à la gravité, appelée "chaînette" est une fonction mathématique de type cosinus hyperbolique (Coshx = ($e^x$ + $e^{-x}$)/2, reliant l'abscisse et l'ordonnée d'un point quelconque de la courbe selon les formules suivantes :

$$y = R_0(\cosh(x/R_0) - 1)$$

$$R = Ro.(Y/Ro + 1)^2$$

dans lesquelles :

- x représente la distance dans la direction horizontale entre ledit point de contact et un point M de la courbe,
- y représente l'altitude du point M (x et y sont donc les abscisses et ordonnées d'un point M de la courbe par rapport à un repère orthonormé dont l'origine est audit point de contact)
- $R_0$ représente le rayon de courbure au dit point de contact, c'est à dire au point de tangence horizontale.
- R représente le rayon de courbure au point M (x, y)

Ainsi, la courbure varie le long de la chaînette depuis la surface, ou son rayon a une valeur maximale $R_{max}$, jusqu'au point de contact, ou son rayon a une valeur minimale $R_{min}$ (ou Ro dans la formule ci-dessus). Sous l'effet des vagues, du vent et du courant, le support de surface se déplace latéralement et verticalement, ce qui a pour effet de soulever ou de reposer la conduite en forme de chaînette, au niveau du fond de la mer.

Ainsi, la conduite présente un rayon de courbure qui est maximal au sommet de la chaînette, en général, d'au moins 1500, notamment de 1500 à 5000m, c'est à dire au point de suspension sur le FPSO, et qui décroît jusqu'au point de contact avec le sol. A cet endroit, le rayon de courbure est minimal dans la portion en suspension. Mais, dans la partie adjacente reposant sur le fond de la mer, ladite conduite étant théoriquement en ligne droite, son rayon de courbure est théoriquement infini. En fait ledit rayon n'est pas infini mais extrêmement élevé, car il subsiste une courbure résiduelle.

Ainsi, au gré des mouvements du support flottant en surface, le point de contact se déplace d'avant en arrière et, dans la zone soulevée ou reposée sur le fond, le rayon de courbure passe successivement d'une valeur minimale $R_{min}$ à une valeur extrêmement élevée, voire infinie dans le cas d'une configuration théorique où la conduite sous-marine repose sur le fond de la mer sensiblement en ligne droite.

Ces flexions alternatives créent des phénomènes de fatigue concentrés dans toute la zone de pied de chaînette et la durée de vie de telles conduites est fortement réduite et en général incompatible avec les durées de vie recherchées pour les liaisons fond-surface, c'est à dire 20-25 ans, voire plus.

De plus, on observe que durant ces mouvements alternatifs du point de contact, la raideur de la conduite, associée à la courbure résiduelle mentionnée précédemment, va dans le temps creuser un sillon sur toute la longueur soulevée puis reposée et créer une zone de transition dans laquelle existera un point d'inflexion où le rayon de courbure, minimal en pied de chaînette, changera alors de sens dans ladite zone de transition, et croîtra pour atteindre enfin une valeur infinie dans la portion de conduite sous-marine reposant en ligne droite sur le fond de la mer.

Ces mouvements répétés sur de longues périodes créeront un sillon d'autant plus important dans les sols peu consolidés que l'on rencontre couramment en grande profondeur, ce qui aura pour effet de modifier la courbure de la chaînette et conduire, si le phénomène s'amplifie, à des risques d'endommagement des conduites, soit au niveau des conduites sous-marines reposant au fond de la mer, soit au niveau des SCR assurant la liaison entre ces conduites sous-marines reposant au fond de la mer et la surface.

La portion la plus critique de la chaînette se situe donc dans la portion proche du point de contact et, la plus grande partie des efforts dans cette partie basse de la chaînette sont en fait engendrés par les mouvements propres du support flottant et par les excitations qui surviennent dans la partie haute de la chaînette soumise au courant et à la houle, l'ensemble de ces excitations se propageant alors mécaniquement tout le long de la conduite jusqu'au pied de chaînette.

Dans cette zone du pied de chaînette, les aciers constituant les conduites sont sélectionnés pour résister à la fatigue pendant toute la durée de vie des installations, mais les soudures entre éléments de conduites constituent des points faibles lorsque ladite conduite véhicule soit de l'eau, soit des fluides comportant de l'eau et plus particulièrement de l'eau salée. En effet, lesdites soudures en présence d'eau sont sujettes à des phénomènes de corrosion créant dans le temps, sous contraintes variables de flexion, des amorces de fissures conduisant à la ruine de ladite conduite.

Pour pallier à ce problème, on réalise des soudures entre éléments de conduite à l'aide d'un acier inoxydable ou un alliage résistant à la corrosion. Les alliages anti corrosion sont bien connus de l'homme de l'art, il s'agit principalement d'alliage base nickel, notamment du type inconel, de préférence de grade particulier, notamment en inconel 625 ou 825, lesdits inconels présentant aussi une excellente résistance à la fatigue de par leur haute limite élastique et permettant ainsi d'atteindre des durées de vie de 20 à 30 ans.

Cependant, pour que la soudure puisse être effectuée dans de bonnes conditions, il est nécessaire de revêtir l'intérieur des deux éléments conduites à souder ensemble du même acier inoxydable ou alliage résistant à la corrosion sur quelques cm au niveau des extrémités des éléments de conduite à souder ensemble, de manière à ce que la passe de pénétration de la soudure qui constituera la future paroi en contact avec le fluide soit du même métal que le métal d'apport de la soudure, en particulier de l'inconel. Ce revêtement en acier inoxydable ou alliage anti corrosion, notamment de type inconel, se fait par un procédé coûteux à l'arc électrique appelé « cladding », c'est-à-dire « revêtement », réalisé en général à l'aide d'une procédé TIG associé à un fil d'apport en acier inoxydable ou alliage résistant à la corrosion.

Cette partie de la surface interne de la conduite recouverte d'acier inoxydable ou alliage anti corrosion de type inconel crée, un problème majeur au niveau du contrôle de soudure, lequel est réalisé depuis l'extérieur à l'aide de moyens acoustiques à balayage pour obtenir une cartographie très précise des défauts de la soudure. En effet, le procédé TIG est très ponctuel et très énergétique et le bain de fusion entre l'acier de base et l'alliage crée des ondulations au niveau de l'interface entre les deux métaux, ce qui rend tout contrôle par ultrasons quasiment impossible. En effet, lors du contrôle ultrasons, lesdites ondulations au niveau de l'interface entre les deux métaux, créent des échos qui rendent quasiment impraticable l'exploitation des résultats, donc la mise en évidence et la localisation de défauts, et de ce fait empêchent de déterminer la qualité de la soudure entre les deux éléments de conduite.

Cette partie de la surface interne de la conduite recouverte d'acier inoxydable ou alliage anti corrosion de type inconel crée, un autre problème majeur au niveau de la paroi interne de la conduite en contact avec le fluide, plus précisément dans la zone de changement de métal de la paroi, c'est-à-dire entre l'acier au carbone conventionnel de la partie courante de l'élément de conduite et l'acier inoxydable ou alliage anti corrosion de type inconel. En effet, dans cette zone de transition, il se produit en présence d'eau un phénomène électrochimique de corrosion de l'acier ordinaire en contact avec l'eau, c'est-à-dire une corrosion galvanique encore appelé « effet de pile » qui crée localement des points de corrosion dans l'acier en contact avec l'eau à proximité de l'acier inoxydable ou alliage anti corrosion, pouvant conduire à des fissurations sous contraintes répétées de flexion, lesquels sont totalement inacceptables pour une bonne tenue en fatigue dans le temps, de la conduite.

Ce type de soudage anti corrosion est donc non seulement délicat à réaliser, notamment dans le cas d'assemblage par soudage sur un navire de pose en mer, mais en outre ce type de soudage est insatisfaisant car il ne peut pas être contrôlé de façon fiable par des tests conventionnels à ultra sons et il entraîne des phénomènes de corrosion de l'acier de la surface interne de la conduite à proximité du soudage.

On connaît par ailleurs des procédés de protection contre la corrosion par chemisage continu de la surface interne en acier de la conduite, à l'aide d'un revêtement souple appelé aussi liner en matériaux thermoplastiques. Mais, ces chemisages sont également coûteux et complexes à réaliser car ils requièrent notamment un ancrage aux extrémités à l'aide de viroles ou manchon pour que le chemisage tienne en place lorsque la conduite véhicule un fluide à forte pression. Ces manchons sont également complexes et coûteux à mettre en place. En outre, les extrémités des rames ou éléments de conduite à assembler par soudage ne doivent pas être pré revêtues de dit chemisage car celui-ci ne supporte pas les températures élevées mises en oeuvre lors des opérations de soudage. Enfin ces chemisages internes continus requièrent des épaisseurs de chemisage d'au moins 10 à 15mm d'épaisseur, ce qui représente une diminution du diamètre interne de la conduite très substantielle et crée donc des pertes de charges additionnelles du fluide véhiculé à l'intérieur de la conduite en opération.

Le but de la présente invention est de fournir un procédé de pose de conduites sous marines destinées à véhiculer des fluides corrosifs et notamment de l'eau comprenant l'assemblage par soudage de rames de conduites sous marines à partir d'un navire de pose en mer de conduites sous marines qui soit :

- fiable en termes de résistance à la corrosion au niveau des soudures et notamment ne présente aucun risque d'effet de pile à l'intérieur de la conduite en opération, et
- - fiable en termes de résistance à la fatigue au niveau de chacune des soudures, et
- en affectant le moins possible les performances de résistances mécaniques et / ou augment le moins possible les pertes de charges du fluide véhiculé à l'intérieur de la conduite en opération, et
- simple et le moins coûteux possible à mettre en oeuvre, et notamment dans lequel on réalise le moins possible d'étape d'assemblage et notamment de soudage à bord du navire de pose.

Pour ce faire la présente invention fournit un procédé de réalisation de conduites sous marines en acier destinées à véhiculer des fluides corrosifs et notamment de l'eau comprenant les étapes dans lesquelles:

1) on réalise en atelier à terre l'assemblage par des premiers soudages des extrémités respectives d'au moins 2 éléments unitaires de conduite pour former des rames de conduite, et

2) on réalise en mer à partir d'un navire de pose l'assemblage par des seconds soudages des extrémités respectives de dites rames pour former une dite conduite,

caractérisé en ce que :

- à l'étape 1) :

  ■ lesdites rames sont réalisées à partir d'au moins 2 éléments unitaires de conduite terminaux comprenant chacun une première extrémité destinée à constituer une des deux extrémités d'une dite rame,

■ un revêtement anti corrosion en acier inoxydable ou alliage résistant à la corrosion, de préférence un alliage base nickel, s'étendant sur la surface interne en acier au carbone de chaque dit élément unitaire de conduite terminal sur une première longueur d'au moins 4 fois, de préférence de 4 à 20 fois l'épaisseur de la paroi de la conduite, depuis ladite première extrémité vers la deuxième extrémité de l'élément unitaire de conduite terminal,

■ la surface interne du reste de chaque élément unitaire de conduite terminal jusqu'à sa deuxième extrémité étant constituée d'un acier au carbone non revêtu d'un dit acier inoxydable ou alliage résistant à la corrosion, et

■ lesdites deuxièmes extrémités étant assemblées par des premiers soudages à l'acier au carbone, et

- avant l'étape 2), on réalise au moins un premier chemisage partiel de la surface interne de ladite rame à l'aide respectivement d'au moins une enveloppe tubulaire en matériau plastique souple de type liner que l'on applique contre ladite surface interne de la rame, chaque dit premier chemisage recouvrant chaque dit premier soudage en acier au carbone entre les extrémités respectives des éléments unitaires de conduite d'une même rame dont la surface interne est constituée d'un même acier au carbone non revêtu d'un dit acier inoxydable ou alliage résistant à la corrosion, et

à l'étape 2), lesdites premières extrémités sont assemblées par des seconds soudages consistant dans des soudages réalisés en même dit acier inoxydable ou en alliage résistant à la corrosion, de préférence un alliage base Nickel.

Dans un mode préféré de réalisation du procédé selon l'invention, avant l'étape 2), de préférence avant l'étape 1) on réalise des seconds chemisages partiels à l'aide d'enveloppes tubulaires en matériau plastique souple de type liner que l'on applique contre ladite surface interne de l'élément de conduite, les dits seconds chemisages recouvrant la ligne de contact entre d'une part ledit revêtement anti corrosion en acier inoxydable ou alliage résistant à la corrosion et d'autre part l'acier au carbone non revêtu d'un dit revêtement anti corrosion de la partie de la surface interne de l'élément unitaire de conduite adjacente au dit revêtement anti corrosion, et le dit second chemisage s'étendant d'une troisième longueur de 2 à 10 fois le diamètre interne de la conduite à partir de ladite ligne de contact par dessus la surface interne en acier au carbone de l'élément unitaire de conduite adjacente au dit revêtement anti corrosion vers une deuxième dite extrémité.

La mise en oeuvre de dits premiers chemisages permet de protéger lesdits premiers soudages en acier au carbone de la corrosion, d'une part en empêchant tout contact avec l'eau véhiculée par la conduite, et d'autre part en renforçant mécaniquement ledit premier soudage.

La dite première longueur de dit revêtement anti corrosion que l'on retrouve de part et d'autre de chaque dit second soudage en acier inoxydable ou alliage résistant à la corrosion sur la surface interne de ladite conduite permet de réaliser un contrôle fiable desdits soudages anti corrosion par des tests à ultrasons tout en fiabilisant la tenue mécanique desdits soudages anti corrosion.

Ladite première longueur de revêtement anti corrosion permet également d'éloigner suffisamment l'extrémité desdits seconds chemisages recouvrant la ligne de contact entre revêtement anti corrosion et acier au carbone, par rapport à l'extrémité à souder par un soudage anti corrosion, de manière à ce que ladite extrémité dudit second chemisage ne soit pas endommagée lors dudit soudage.

D'autre part, ledit second chemisage recouvrant la ligne de contact entre revêtement et acier au carbone permet d'éloigner la surface interne en acier au carbone de la surface du revêtement en acier ou alliage anti corrosion en contact avec l'eau circulant dans la conduite en opération, et ainsi éviter la corrosion de l'acier au carbone à proximité de la ligne de contact due à l'effet de pile entre les deux matériaux lorsqu'ils sont en contact au niveau de la ligne de contact et avec l'eau.

Dans un mode particulier de réalisation du procédé selon l'invention, à l'étape 1) on met en oeuvre au moins un élément unitaire de conduite intermédiaire entre les deux éléments unitaires de conduite terminaux de la rame, ledit élément unitaire de conduite intermédiaire comprenant une surface interne entièrement constituée d'un acier au carbone non revêtu d'un dit acier inoxydable ou alliage résistant à la corrosion, et chaque extrémité dudit élément unitaire de conduite intermédiaire étant assemblée par un dit premier soudage à l'acier au carbone soit à une dite deuxième extrémité d'un élément unitaire de conduite terminal soit à une extrémité d'un autre élément unitaire de conduite intermédiaire.

Plus particulièrement encore, dans un procédé selon l'invention, on réalise une pluralité de chemisages partiels de la surface interne de ladite rame à l'aide respectivement d'une pluralité d'enveloppes tubulaires en matériau plastique souple de type liner que l'on applique contre ladite surface interne de la rame de manière discontinue comprenant :

- desdits premiers chemisages recouvrant les premiers soudages en acier au carbone entre deux éléments unitaires de conduite contigus assemblés dans une même dite rame, et

- deux dits seconds chemisages recouvrant chaque ligne de contact entre d'une part le revêtement en dit acier inoxydable ou alliage résistant à la corrosion à chaque extrémité de la rame et d'autre part l'acier au carbone de la partie de la surface interne de l'élément unitaire de conduite adjacente à chaque dit revêtement anti corrosion.

Les première, deuxième et troisième longueurs s'entendent de dimensions dans la direction longitudinale (XX') de l'élément unitaire de conduite terminal.

On entend par «chemisage partiel», un chemisage qui ne s'étend pas sur la totalité de la surface interne de la conduite, mais sur une partie seulement de sa longueur, les différents chemisage partiels constituant des chemisages discontinus.

On entend par «éléments de conduite terminaux» de la rame, les premier et dernier éléments de conduite de la rame.

On comprend que :

- lesdits éléments unitaires de conduite terminaux sont disposés de telle sorte que leurs dites premières extrémités constituent les extrémités de la rame, et
- la rame peut être constituée de 2 éléments unitaires de conduite du type comprenant une dite première extrémité revêtue de dit alliage anti corrosion, ou comprendre entre les deux éléments de conduite terminaux des éléments de conduite intermédiaires ne comprenant pas de dite première extrémité, et
- ladite ligne de contact est en fait la limite de ladite première zone avec le reste de la surface interne de l'élément de conduite terminal.

Les parties restantes de la conduite entre deux dits premiers chemisages d'une part et entre chaque dit second chemisage et le premier chemisage le plus proche d'autre part sont en acier au carbone conventionnel non revêtu de liner ou d'alliage anti corrosion.

Le procédé selon la présente invention est alors particulièrement original et avantageux en ce que :

- il permet de réaliser le plus grand nombre de soudure à terre et sur des conduites en acier conventionnel, c'est-à-dire non revêtu d'acier ou alliage résistant à la corrosion, et
- il ne requiert la mise en oeuvre que de chemisages partiels sur des longueurs relativement réduites que ce soit au niveau des soudures en acier conventionnel entre les éléments de conduites pré assemblés à terre sous forme de rames ou au niveau des extrémités des rames à assembler sur le navire de pose en mer. Ces chemisages partiels ne requièrent pas d'ancrage spécifique de leurs extrémités .

Le procédé selon l'invention présente plus particulièrement les avantages suivants :

- protéger la conduite contre la corrosion de l'acier au carbone des soudures desdits premiers soudages grâce aux dits premiers chemisages,
- protéger la conduite contre la corrosion galvanique l'acier au carbone à proximité des revêtements en acier ou alliage résistant à la corrosion, corrosion due à un effet de pile entre les deux qualités d'acier ou alliage par mise en contact avec l'eau véhiculée dans la conduite lorsqu'elles sont trop rapprochées, grâce aux dits seconds chemisages.
- réaliser le maximum d'opérations de soudage et de protection des soudures à terre, seuls lesdits seconds soudages à l'aide d'un acier ou alliage résistant à la corrosion étant réalisés à bord du navire de pose, et
- limiter les zones dans lesquelles le diamètre interne est réduit par un chemisage d'enveloppe en matériau plastique.

La dite première zone en revêtement acier ou alliage résistant à la corrosion s'étend sur une première longueur nécessaire et suffisante pour :

- d'une part permettre de mettre en oeuvre le soudage des extrémités de deux rames entre elles à l'étape 2) sans risquer de dégrader lesdits seconds chemisages du fait de la température mise en oeuvre lors dudit soudage, et
- d'autre part pouvoir réaliser ultérieurement un contrôle de la qualité des soudures desdits seconds soudages par des tests à ultrasons.

Chaque dit second chemisage s'étend sur une longueur nécessaire et suffisante pour éviter un effet de corrosion galvanique de l'acier au carbone adjacent à ladite première zone par effet de pile entre ledit acier ou alliage résistant à la corrosion et l'acier au carbone de la surface interne de conduite adjacente à ladite première zone lorsque de l'eau circule dans la conduite en opération. Et, l'extrémité dudit second chemisage la plus proche de ladite première extrémité est telle que ledit second chemisage est suffisamment éloigné de ladite première extrémité pour ne pas être dégradée lors dudit second soudage du fait notamment de la température élevée mise en oeuvre.

Selon des caractéristiques particulières du procédé selon l'invention

- ledit premier revêtement s'étend sur une dite première longueur de 4 à 10 fois l'épaisseur de la paroi de la conduite à partir desdites extrémités à souder par desdits soudages anti corrosion, et
- chaque dit second chemisage recouvre :
- une partie dudit revêtement anti corrosion s'étendant à partir de la ligne de contact vers ladite première extrémité d'une deuxième longueur $l_2$ de 1/8 à 1 fois le diamètre interne de la conduite, et notamment de 10 à 100mm suffisante-pour assurer un bon collage dudit chemisage par-dessus ladite ligne de contact, et

- une partie de ladite surface interne en acier au carbone adjacente audit revetement anti corrosion s'étendant à partir de ladite ligne de contact vers ladite deuxième extrémité d'une troisième longueur $l_3$ de 3 à 10 fois, de préférence 5 à 10 fois le diamètre interne de la conduite.

On entend ici par « épaisseur de la paroi de la conduite » et « diamètre interne de la conduite » l'épaisseur et le diamètre de la partie courante en acier au carbone des éléments unitaires de conduite non revêtue de dit revêtement et dit chemisage.

Lesdits premiers chemisages s'étendent sur une longueur suffisante de part et d'autre desdits premiers soudages pour protéger lesdites premières soudures à l'acier au carbone d'une corrosion par l'eau véhiculée par la conduite en opération.

Plus particulièrement, lesdits premiers chemisages en acier au carbone s'étendent sur une longueur $l_0$ de 1/4 à 2 fois le diamètre interne de la conduite.

On entend ici par « épaisseur de la paroi de la conduite » et « diamètre interne de la conduite » l'épaisseur et le diamètre de la partie courante en acier au carbone des éléments unitaires de conduite non revêtue de dit revêtement et dit chemisage.

Avantageusement, on réalise lesdits premiers et seconds chemisages sur la surface interne desdits éléments unitaires de conduite avant leur assemblage.

Avantageusement encore, à l'étape 2) on réalise l'assemblage par dit second soudage d'une extrémité d'une deuxième rame avec l'extrémité d'une première rame précédemment assemblée à son autre extrémité à l'extrémité d'une conduite en cours de pose.

Pour que le contrôle ultrasons soit rendu plus fiable par des moyens acoustiques à balayage, le procédé de revêtement en acier inoxydable ou alliage anti corrosion est réalisé au moyen d'une torche plasma, le métal d'apport étant constitué de poudre d'acier inoxydable ou alliage anti corrosion tel que l'inconel véhiculé au sein du gaz de ladite torche plasma.

Dans une version préférée, on utilise le procédé de revêtement en alliage anti corrosion ou acier inoxydable par placage par fusion par effet joule de feuillard d'un acier inoxydable ou alliage anti corrosion connu de l'homme de l'art sous le nom d'électroslag. Ce procédé utilise un feuillard de 20 à 50 mm de largeur et de 0,5 à 1 mm d'épaisseur, que l'on fait fondre, l'énergie nécessaire pour fondre le feuillard et le métal de base de la conduite étant fournie par effet joule et non pas par un arc électrique, ce qui minimise de manière radicale la perturbation de l'interface entre l'acier de base de la conduite et l'acier inoxydable ou l'alliage anti corrosion.

En procédant ainsi, le plasma ou le métal fondu par électroslag crée une zone de fusion beaucoup plus régulière sur la surface active qu'une torche TIG associée à un fil d'apport, ledit plasma ou métal fondu par électroslag permettant la fusion de l'interface entre l'acier de base et le métal d'apport, sans créer les ondulations précédemment mentionnées, lesdites ondulations empêchant l'utilisation de techniques ultrasons pour effectuer le contrôle de la soudure.

De plus, il convient que la surface de la conduite en acier sur laquelle est déposé l'acier inoxydable ou alliage anti corrosion présente un état de surface de très haute qualité, de manière à ce que l'interface entre l'acier inoxydable ou alliage anti corrosion et l'acier au carbone du pipe reste sensiblement cylindrique de section circulaire et uniforme, en fin de processus.

Ainsi, on usine tout d'abord l'alésage du pipe avec une grande précision sur ladite première longueur, soit par exemple environ 150mm, de manière à obtenir un excellent état de surface, c'est-à-dire pratiquement un fini brillant, correspondant à un état de surface meilleur que Ra=1,6 (Ra ≤ 1,6) (Ra=rugosité apparente), puis on effectue le revêtement en acier inoxydable ou alliage résistant à la corrosion, que l'on réalèse ensuite au diamètre nominal intérieur de la conduite, pour obtenir un bon état de surface.

Dans un mode préféré de réalisation, le procédé de revêtement d'acier inoxydable ou alliage résistant à la corrosion comprend plus précisément :

- l'alésage de la surface interne sur une certaine profondeur jusqu'à obtenir un fini brillant , et
- le dépôt par torche plasma ou par placage par fusion par effet joule de feuillard selon la technique électroslag d'un dit acier inoxydable ou alliage anti corrosion sur une épaisseur supérieure à ladite profondeur de l'alésage, puis
- le réalésage de la surface du dépôt de dit acier inoxydable ou alliage anti corrosion, pour aplanir sa surface au même niveau que la surface adjacente en acier au carbone non revêtue de dit acier inoxydable ou dit alliage résistant à la corrosion.

L'alésage initial permet que la surface interne de la conduite sur laquelle est déposé l'acier inoxydable ou l'alliage résistant à la corrosion présente un état de surface de très haute qualité de manière à ce que l'interface entre les deux qualités d'acier ou alliage : l'acier au carbone de base et l'acier ou alliage résistant à la corrosion déposé soit sensiblement cylindrique et de section sensiblement circulaire. D'autre part, le rechargement par torche plasma par la technique électroslag permet d'obtenir un rechargement uniforme de grande précision. Ainsi, il est possible de réaliser le contrôle de la soudure par des tests à ultrasons précis et fiables.

Dans un mode préféré de réalisation, on réalise lesdits revêtements anti corrosion et dits seconds soudages anti corrosion avec un dit alliage résistant à la corrosion du type Inconel à très haute limite élastique et résistant à la fatigue, de préférence de grade Inconel 625.

Avantageusement, lesdits chemisages comprennent une étape d'encollage de la surface externe desdites enveloppes mises en forme tubulaire à l'extérieur de la conduite avant application sur la surface interne de la conduite.

Avantageusement encore, lesdites surfaces externes des enveloppes sont préalablement traitées par un jet de plasma froid d'air avant encollage.

Dans un mode préféré de réalisation, lesdites enveloppes sont introduites sous forme pliées à l'intérieur de la rame après encollage, puis remise en forme tubulaire par expansion radiale et plaquage de la surface externe de chaque enveloppe contre la surface interne de la conduite, de préférence par gonflage sous pression ou pressurisation au moyen d'un ballon cylindrique de longueur supérieure à la longueur de ladite enveloppe, préalablement introduit à l'intérieur de ladite enveloppe.

Plus particulièrement, lesdites enveloppes après encollage sont pliées longitudinalement de manière à présenter en section transversale un contour en forme de haricot puis introduites à l'aide d'un chariot à l'intérieur de la conduite dans laquelle elles sont remises en forme tubulaire pour être plaquées contre la surface interne de la conduite.

Plus particulièrement encore, la surface interne desdits éléments de conduite terminaux est traitée par sablage au niveau des zones de dit chemisage avant d'appliquer lesdits chemisages et le cas échéant après l'étape de dit revêtement par un acier inoxydable ou alliage anti corrosion.

Plus particulièrement encore, la surface interne desdits éléments de conduite terminaux est traitée par sablage au niveau des zones de dit premier chemisage avant l'opération de soudage des éléments de conduite entre eux.

De façon connue, lesdites enveloppes sont réalisées en matériaux choisis parmi les polyuréthanne, époxy, caoutchouc, polypropylène, polyéthylène et polyamide, élastomère fluoré et silicone.

La présente invention fournit également des conduites sous marines de liaison fond-surface dont au moins une partie est obtenue par un procédé selon l'invention.

Plus particulièrement, les conduites sous marines de liaison fond-surface selon l'invention sont des conduites caténaires du type SCR s'étendant selon une configuration en forme de chaînette et dont au moins une partie comprenant la zone en contact avec le sol s'étend sur au moins 100m, de préférence 200m au dessus du sol, a été assemblée par un procédé selon l'invention.

La présente invention fournit également une conduite sous marine en acier destinée à véhiculer des fluides corrosifs et notamment de l'eau obtenue par le procédé de l'invention caractérisée en ce qu'elle comprend une pluralité de rames de conduites assemblées par soudage et constituées d'éléments unitaires de conduites assemblés par soudage, comprenant :

- une pluralité de rames de conduites assemblées entre elles à leurs extrémités par desdits seconds soudages anti corrosion en acier inoxydable ou en alliage résistant à la corrosion, et constituées de dits éléments unitaires de conduites assemblés entre eux par desdits premiers soudages en acier au carbone,
- les surfaces internes des extrémités desdites rames assemblées par dits seconds soudages comprenant desdits revêtements anticorrosion en dit acier inoxydable ou alliage résistant à la corrosion, ledit revêtement s'étendant depuis chaque dite extrémité sur une dite première longueur $l_1$, et
- desdits premiers chemisages partiels à l'aide d'enveloppes tubulaires en matériau plastique souple de type liner étant appliqués contre ladite surface interne de la conduite, lesdits premiers chemisages recouvrant les dits premiers soudages en acier au carbone entre deux éléments unitaires de conduite contigus assemblés dans une même dite rame

Plus particulièrement encore la présente invention fournit une conduite sous marine de liaison fond-surface obtenue par le procédé selon l'invention, comprenant desdits seconds chemisages partiels à l'aide d'enveloppes tubulaires en matériau plastique souple de type liner appliqués contre ladite surface interne de la conduite, chaque dit second chemisage recouvrant chaque ligne de contact entre d'une part un dit revêtement anti corrosion et d'autre part l'acier au carbone de la partie de la surface interne de l'élément unitaire de conduite adjacente à chaque dit revêtement anti corrosion, et chaque dit second chemisage s'étendant d'une dite troisième longueur $l_3$.

Plus particulièrement encore, la présente invention fournit des conduites comprenant :

- une pluralité de dits chemisages partiels de la surface interne de ladite rame constituée respectivement d'une pluralité d'enveloppes tubulaires en matériau plastique souple de type liner appliqués par collage contre ladite surface interne de la rame de manière discontinue comprenant :
- desdits premiers chemisages recouvrant lesdits premiers soudages en acier au carbone entre deux éléments unitaires de conduite contigus assemblés dans une même dite rame, et
- deux dits seconds chemisages recouvrant chaque ligne de contact entre d'une part le revêtement en acier inoxydable ou alliage résistant à la corrosion et d'autre part l'acier au carbone de la partie de la surface interne de l'élément unitaire de conduite adjacente à chaque dit revêtement anti corrosion.

Plus particulièrement encore, une conduite selon l'invention comprend une partie constituée par assemblage de 2 à 4 dites rames, chaque dite rame étant constituée de 2 à 4 dits éléments de unitaires de conduite de 5 à 15 m de long.

D'autres caractéristiques et avantages de la présente invention apparaîtront à la lumière détaillée des modes de réalisation qui vont suivre, en référence aux figures 1 à 7.

La figure 1 est une vue de côté d'un conduit en en configuration de chaînette simple 1, suspendue à un support flottant 20 de type FPSO, et dont l'extrémité inférieure repose sur le fond de la mer 40, représentée dans trois positions différentes $1_a, 1_b, 1_c$.

La figure 2 est une coupe en vue de côté détaillant la tranchée 12 creusée par le pied 11 de chaînette lors des mouvements de soulèvement et de repos de la conduite sur le fond marin.

La figure 3 représente en vue de côté une rame comportant quatre éléments unitaires de conduite assemblés par soudage.

La figure 3a représente en coupe et en vue de côté un premier chemisage installé au droit d'une soudure en acier au carbone réalisée en atelier.

La figure 3b représente en coupe et en vue de côté un second chemisage installé à chacune des extrémités de ladite rame.

Les figures 4a-4b-4c représentent en coupe et en vue de côté les différentes phases d'un cladding de l'extrémité d'une rame, avec un alliage résistant à la corrosion et à la fatigue, de type inconel.

Les figures 4d-4e représentent en coupe et en vue de côté les différentes phases de l'insertion d'un second chemisage à l'extrémité d'une rame.

Les figures 5a-5b-5c-5d représentent en coupe les différentes phases de préparation d'un second chemisage devant être introduit à l'intérieur de la rame.

Les figures 6a-6b représentent en coupe et en vue de côté les différentes phases de l'insertion d'un premier chemisage à la jonction de deux éléments unitaires de conduite assemblées par soudage en atelier.

La figure 7a représente un navire de pose de rames équipé d'une tour de pose en J.

La figure 7b représente en vue de côté une conduite descendant jusqu'au fond de la mer et maintenue en tension au sein de ladite tour de pose en J, et une rame maintenue dans la partie supérieure de ladite tour de pose en J, ladite rame étant approchée de ladite conduite en suspension, en vue d'être assemblée par soudage.

La figure 7c représente en vue de côté les deux portions de conduite. Dans la partie supérieure les conduites sont représentées prêtes à être soudées, dans la partie inférieure, la soudure est terminée.

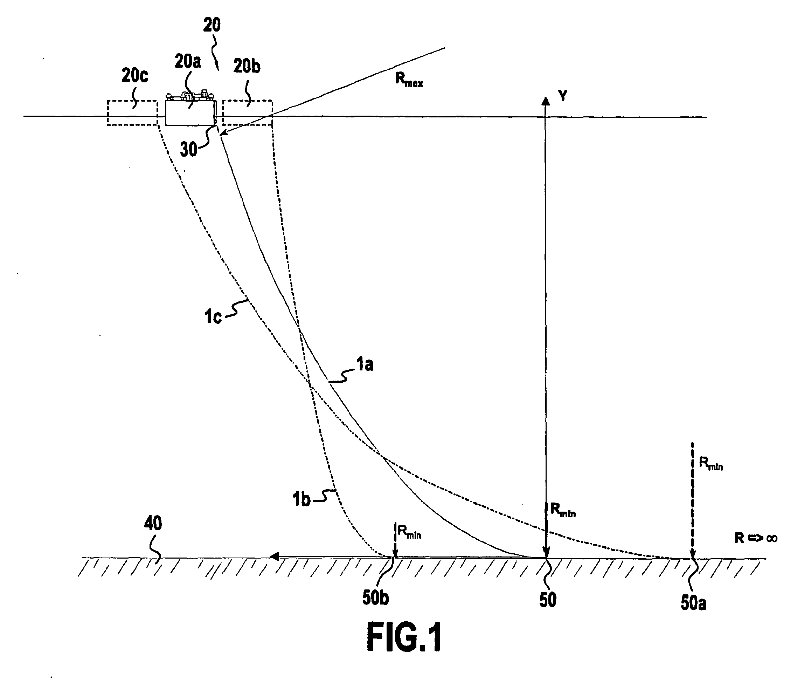

Dans la figure 1 on a représenté en vue de côté une liaison fond surface 1 de type SCR, suspendue en 30 à un support flottant 20 de type FPSO, et reposant sur le fond de la mer 40 au niveau du point de contact 50.

La courbure varie le long de la chaînette depuis la surface, ou son rayon a une valeur maximale $R_{max}$, jusqu'au point de contact, ou son rayon a une valeur minimale $R_{min}$. Sous l'effet des vagues, du vent et du courant, le support flottant 20 se déplace, par exemple de gauche à droite comme représenté sur la figure, ce qui a pour effet de soulever ou de reposer la conduite en forme de chaînette, au niveau du fond de la mer. Dans la position $20_c$ le support flottant s'écarte de la position normale $20_a$, ce qui a pour effet de tendre la chaînette $1_c$ en la soulevant, et de déplacer le point de contact 50 vers la droite ; le rayon de courbure $R_{min}$ en pied de chaînette augmente, de même que la tension horizontale $H_a$ au niveau dudit point de contact, ainsi que la tension dans la conduite au niveau dudit support flottant. De la même manière, dans la position $20_b$, le déplacement vers la droite du support flottant a pour effet de détendre la chaînette $1_b$ et de reposer une partie de la conduite sur le fond de la mer. Le rayon $R_{min}$ au niveau du point de contact 50 décroît, de même que la tension horizontale $H_b$ dans la conduite au même point, ainsi que la tension dans la conduite au niveau dudit support flottant. Cette réduction du rayon de courbure en 50b crée des contraintes internes considérables au sein de la structure de la conduite ce qui engendre des phénomènes de fatigue cumulés pouvant conduire à la ruine de la liaison fond-surface.

Ainsi, la conduite présente un rayon de courbure qui est maximal au sommet de la chaînette, c'est à dire au point de suspension 30 sur le FPSO, et qui décroît jusqu'au point de contact 50 avec le sol 40. A cet endroit, le rayon de courbure est minimal dans la portion en suspension, mais dans la partie adjacente reposant sur le fond de la mer, ladite conduite étant théoriquement en ligne droite, son rayon de courbure est théoriquement infini. En fait ledit rayon n'est pas infini mais extrêmement élevé, car il reste une courbure résiduelle.

Ainsi, comme expliqué précédemment, au gré des mouvements du support flottant en surface 20, le point de contact 50 se déplace de droite à gauche et, dans la zone soulevée ou reposée sur le fond, le rayon de courbure passe successivement d'une valeur minimale $R_{min}$ à une valeur extrêmement élevée, voire infinie dans le cas d'une configuration sensiblement en ligne droite.

Ces flexions alternatives créent des phénomènes de fatigue concentrés dans toute la zone de pied de chaînette et la durée de vie de telles conduites est fortement réduite et en général incompatible avec les durées de vie recherchées pour les liaisons fond-surface, c'est à dire 20-25 ans, voire plus.

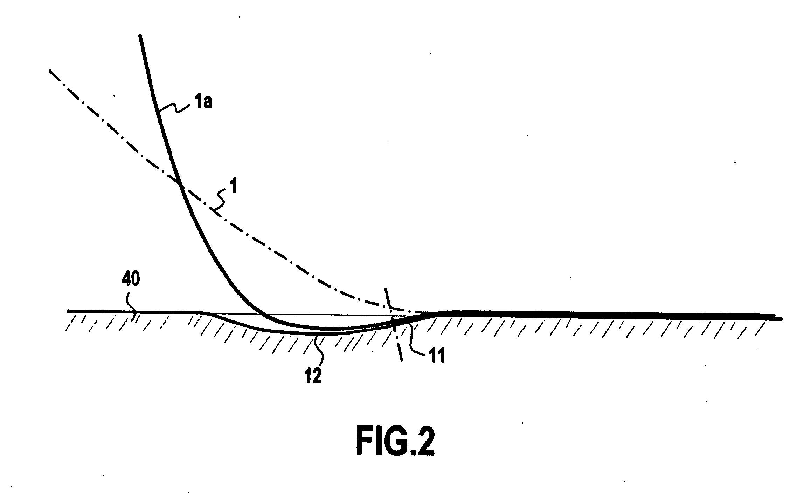

De plus, comme illustré dans la figure 2, on observe que durant ces mouvements alternatifs du point de contact, la raideur de la conduite, associée à la courbure résiduelle mentionnée précédemment, va dans le temps creuser un sillon 12 sur toute la longueur soulevée puis reposée, et créer ainsi une zone de transition dans laquelle existera un point d'inflexion 11, où la courbure change de sens dans les zones de transition, pour atteindre enfin une valeur infinie dans la portion de conduite sous-marine reposant en ligne droite sur le fond de la mer, ladite portion n'étant soulevée que de manière exceptionnelle, par exemple lors du cumul maximal dans la même direction, vers la gauche, de tous les éléments perturbateurs (houle-vent-courant) agissant sur le support flottant et sur la chaînette, ou encore lors de l'apparition de phénomènes de résonance au niveau de la chaînette elle-même.

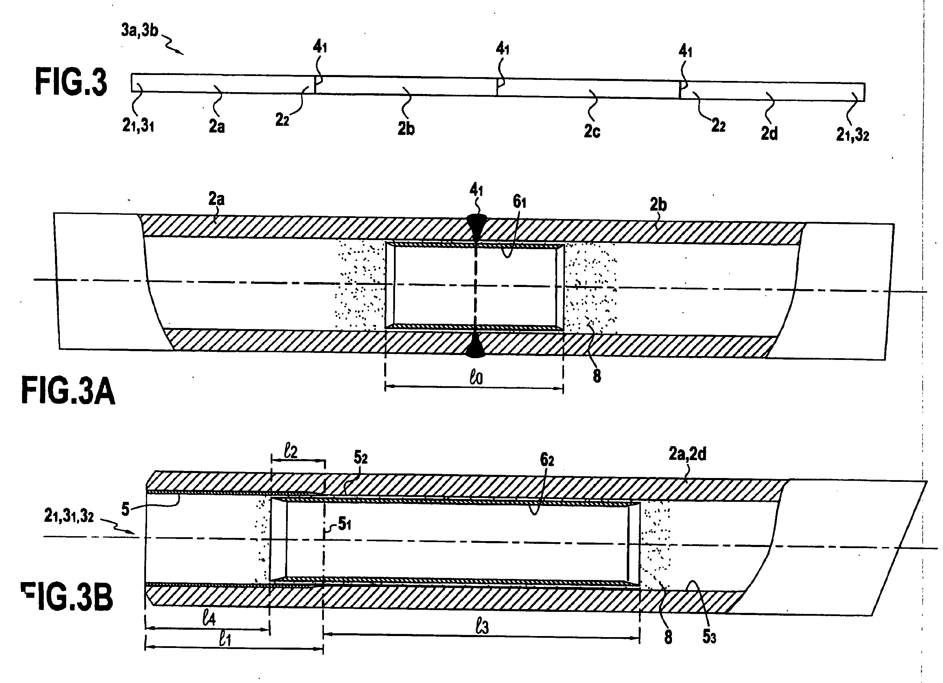

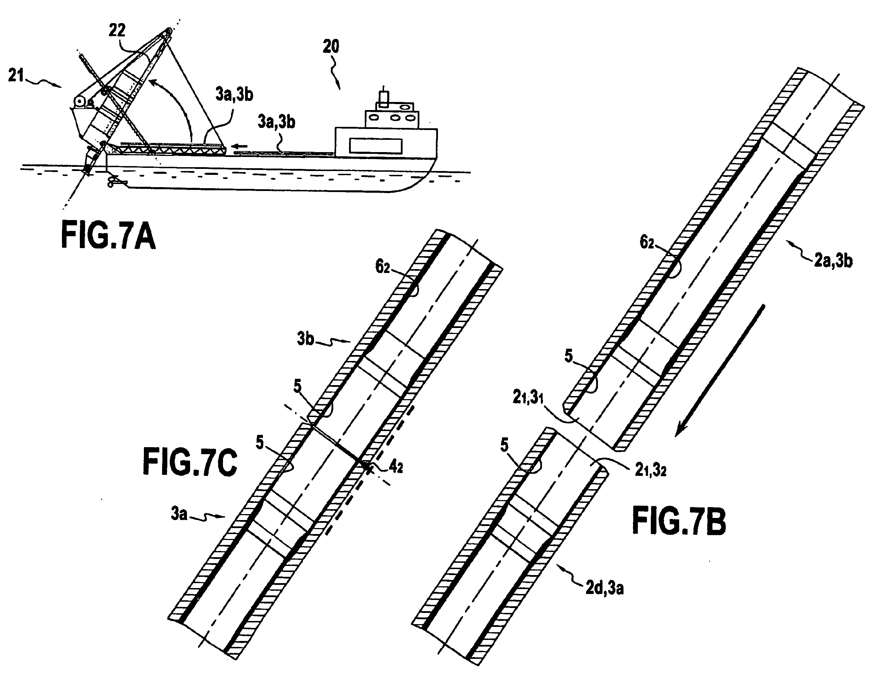

Dans la figure 3 on a représenté une rame 3a-3b comportant quatre éléments unitaires de conduite 2a-2d assemblés entre eux par soudage réalisé en atelier, les extrémités $3_1$, $3_2$ de ladite rame devant être soudées à bord du navire de pose 20 de la figure 7 équipé d'une tour de pose en J 21. A bord de ce navire, les rames sont stockées sur le pont à l'horizontale, puis elles sont relevées l'une après l'autre par la rampe 22 pour être insérées dans la tour de pose en J. La portion de conduite déjà posée est maintenue en tension au sein de la tour par une pince avec la rame précédemment assemblée 3a à une deuxième extrémité, puis une nouvelle rame 3b est descendue vers ladite conduite maintenue en tension, comme détaillé sur la figure 7b, pour finalement être soudée comme détaillé sur la figure 7c.

Dans la figure 3a on a représenté en coupe en vue de côté, deux éléments unitaires de conduite 2a-2b assemblés en atelier par une première soudure conventionnelle $4_1$ en acier au carbone, ladite première soudure $4_1$ étant protégée de tout contact avec le fluide circulant dans la conduite, par un premier chemisage $6_1$ dont la paroi extérieure est intimement collée $7_1$ à la paroi interne de ladite rame.

Dans la figure 3b on a représenté en coupe en vue de côté, l'extrémité d'une rame destinée à être soudée à bord de la tour de pose en J du navire d'installation par une soudure en alliage résistant à la corrosion et à la fatigue, ladite extrémité étant préalablement revêtue d'un même alliage de type inconel de grade 625 sur une première longueur $l_1$ par exemple de 150mm, puis partiellement recouverte par un second chemisage $6_2$ dont la paroi extérieure est intimement collée à la paroi interne de ladite rame, et s'étendant sur une distance d'une longueur $l_2 + l_3$ de par exemple 2000mm, de manière à protéger la zone de transition comprenant et entourant la ligne de contact 5 entre l'alliage inconel 625 à très haute limite élastique résistant à la fatigue et à la corrosion, et l'acier au carbone de base de la conduite de tout contact avec le fluide circulant dans la conduite, évitant ainsi les phénomènes de corrosion galvanique, ou effet de pile, qui se produisent en présence de fluides comportant entre autres de l'eau de mer au niveau de ladite zone de transition. La présence de ce second chemisage $6_2$ permet d'éloigner de manière considérable les deux métaux en présence ; il en résulte alors une réduction drastique, voire une annulation de l'effet galvanique, dont le risque principal est la corrosion ponctuelle de l'acier de base de la conduite, pouvant créer des micro-fissures sous contraintes de flexion dynamiques, pouvant conduire à la rupture de la conduite et à la ruine des installations.

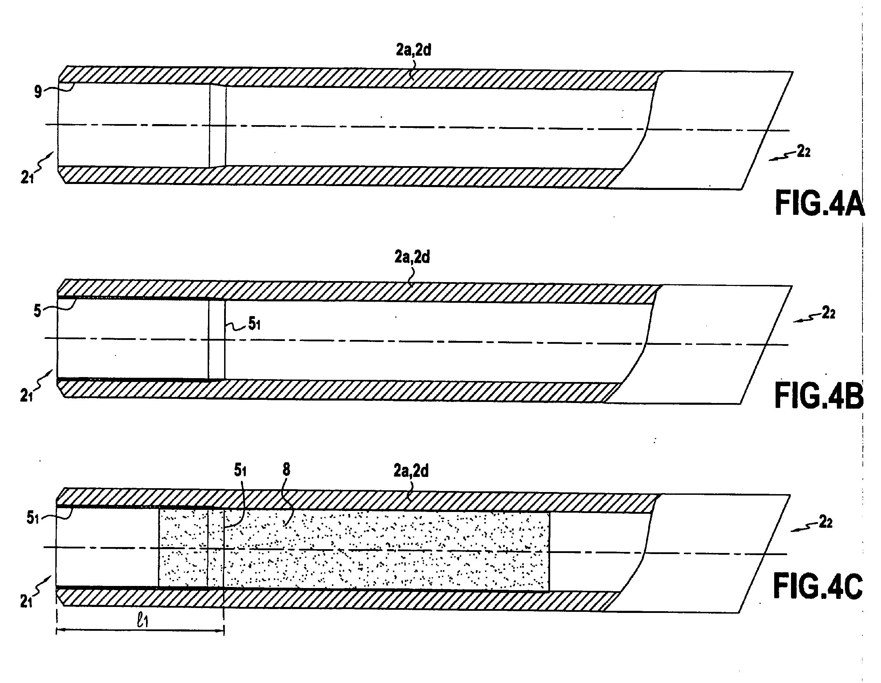

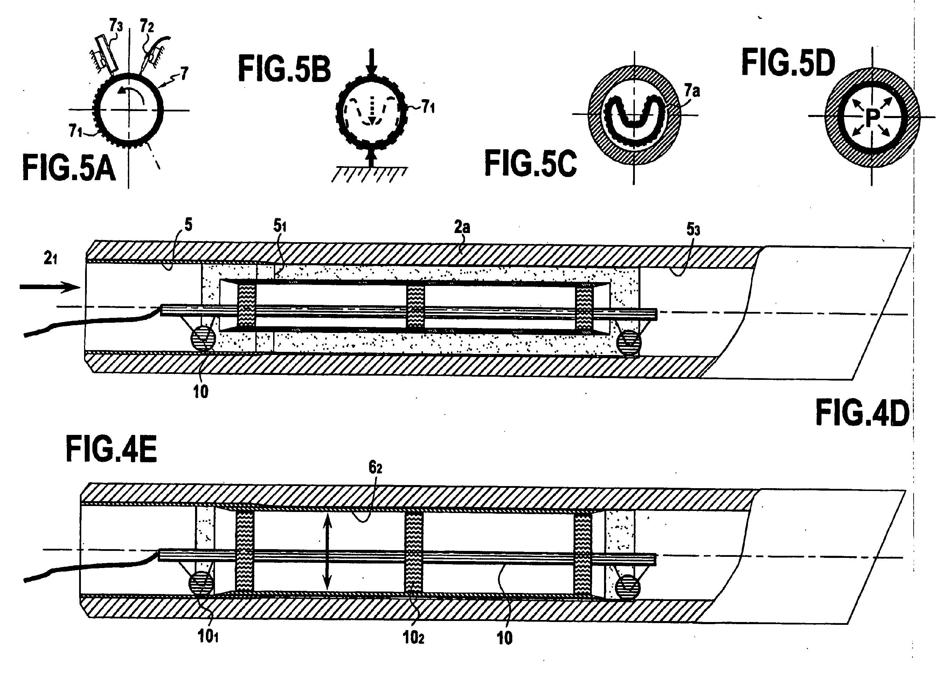

Pour la clarté des explications, les premier et second chemisages $6_1$, $6_2$ sont représentés légèrement séparés de la paroi de la rame respectivement sur les figures 3a-3b, alors qu'ils sont représentés collés intimement sur les figures 4e, 5d, 6b & 7b-7c.

Sur les figures 4a-4b-4c on a représenté en coupe et en vue de côté l'extrémité d'une rame aux différentes étapes du processus de revêtement ou cladding par plasma, d'un alliage résistant à la corrosion et à très haute limite élastique résistant à la corrosion et à la fatigue, de type inconel 625. Sur la figure 4a, on alèse 9 l'extrémité $2_1$ de l'élément unitaire de conduite de manière à supprimer environ 3 mm d'acier en épaisseur sur une longueur $l_1$ d'environ 150mm. Cet usinage doit conduire à un état de surface excellent de niveau de rugosité apparente Ra1,6, c'est-à-dire à un fini brillant. L'intérieur de la conduite est alors claddé au moyen d'un plasma, comme montré sur la figure 4b, le métal d'apport étant véhiculé par le gaz sous forme de poudre. Le plasma crée à la surface de la conduite en acier un bain en fusion d'épaisseur très mince dans lequel la poudre mise en fusion lors de son passage dans le coeur du plasma, vient augmenter l'épaisseur dudit bain pour atteindre finalement l'épaisseur correspondant à l'usinage effectué à l'étape précédente. La torche à plasma fait des mouvements de va et vient réguliers, la conduite est mise en rotation très lente de manière à couvrir de manière continue l'intégralité de la périphérie de la paroi de la conduite, sur ladite longueur de 150mm. Puis, après cladding, l'intérieur de la conduite est réalésée, de manière à supprimer les traces de cladding et rajuster le diamètre de la zone claddée de manière à ce qu'il corresponde à celui de la portion courante de la rame. Enfin l'intérieur de la conduite est sablée 8 sur environ 1700mm, la zone sablée et ledit second chemisage $6_2$ commençant à environ une distance $l_4$ de 100 à 150mm de l'extrémité de l'élément unitaire de conduite à souder.

Sur les figures 5a-5d on a représenté en coupe les différentes étapes de la préparation et de la mise en place des enveloppes 7 des premier et second chemisages $6_1$, $6_2$. Sur la figure 5a, on prépare la surface externe desdites enveloppes 7 au moyen d'un plasma froid d'air $7_2$, destiné à nettoyer et activer la surface de ladite enveloppe plastique avant d'appliquer la colle $7_1$ au moyen d'un tête d'encollage $7_3$, ces deux processus étant réalisés de préférence sur machine automatique à commande numérique. L'activation de surface d'un matériau plastique de l'enveloppe permet de casser les molécules de surface ouvrant ainsi des liaisons chimiques dont l'effet est d'améliorer de manière considérable les performances du collage. Les équipements de plasma froid d'air sont disponibles auprès de la société Plasma-Treat - France. Pour la clarté des explications, le film de colle $7_1$ est représenté en pointillé sur lesdites figures, mais en réalité, ce film $7_1$ est continu sur l'intégralité de la surface de la chemise.

On utilise avantageusement comme colles bi-composants tels que époxy, polyuréthane qui réticulent après application des enveloppes sur la surface interne de la conduite.

Sur la figure 5b, on écrase et plie longitudinalement par l'extérieur l'enveloppe 7 de manière à lui donner une forme de haricot 7a, ladite forme devant s'inscrire intégralement dans la forme circulaire initiale. En fait, après encollage, l'enveloppe ne doit plus être manipulée par l'extérieur, mais par l'intérieur, par exemple au moyen de dispositifs à ventouse et à vide $10_2$ qui permettront de le maintenir pendant toute la mise en place au sein de la conduite. Puis l'enveloppe 7 en forme de haricot 7a est maintenue dans un chariot 10 au moyen de dispositifs à dépression $10_2$, puis introduite dans la rame jusqu'à son emplacement définitif. Le dispositif à dépression est alors relâché et l'enveloppe reprend alors sa forme cylindrique et sa paroi externe vient se plaquer intimement contre la paroi interne de la conduite dans la zone qui a été préalablement sablée 8. Pour améliorer la tenue du collage, on introduit avantageusement un ballon cylindrique, non représenté, à l'intérieur du chemisage, la longueur dudit ballon étant supérieure à la longueur dudit chemisage $6_1$, $6_2$, et l'on pressurise ledit ballon à une pression élevée, par exemple 10 à 15 bars, de manière à résorber les éventuelles bulles présentes au niveau du film de colle et assurer ainsi un excellent collage entre ledit chemisage et la conduite.

La figure 4d détaille l'insertion du chariot 10 maintenant l'enveloppe 7 au moyen de dispositifs à dépression $10_2$. Il est muni de roulettes de guidage inférieures $10_1$ et de roulettes latérales non représentées, de manière à ce que le second chemisage en forme de haricot ne vienne en aucun cas en contact avec la paroi de la conduite pendant la phase d'insertion. Le second chemisage $6_2$ est alors positionné de manière à recouvrir d'une deuxième longueur $l_2$ de 10 à 100mm, par exemple 5cm environ, le revêtement 5 de manière à assurer un bon collage par-dessus la limite de contact $5_1$, puis le dispositif à dépression $10_2$ est relâché ; le second chemisage se remet alors au rond. Le chariot 10 est alors retiré et est remplacé par ledit ballon cylindrique non représenté que l'on maintient en pression, de préférence à pression élevée de 10 à 15 bars ($10^6$ à $1,5 \times 10^6$ p) pendant toute la durée de la réticulation de la colle.

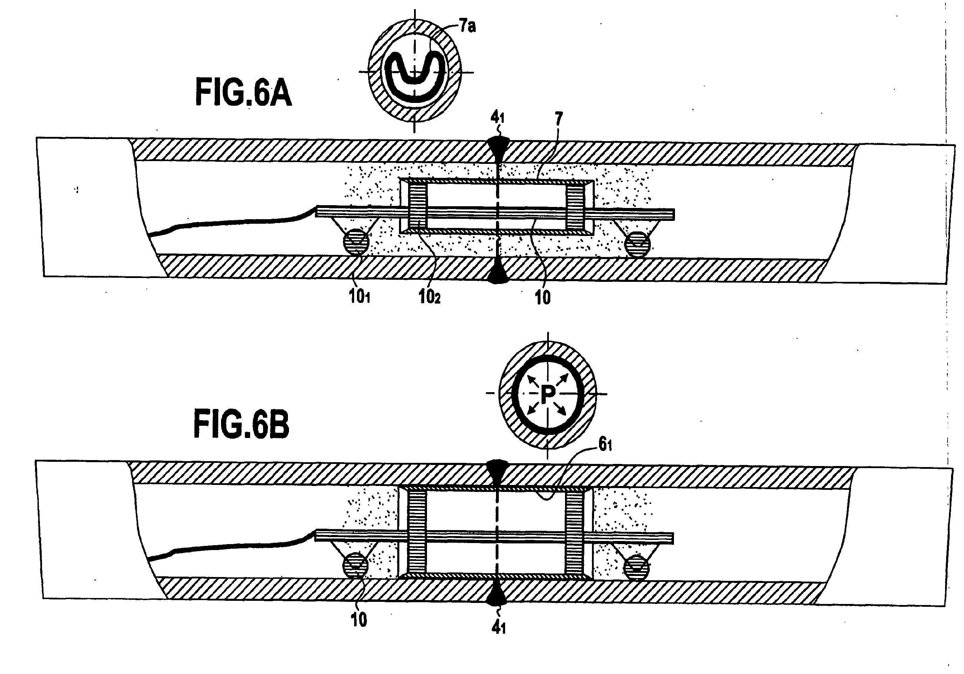

Sur la figure 6a on a représenté en coupe et en vue de côté l'insertion d'un premier chemisage $6_1$ encollé et mis en haricot selon la procédure détaillé sur les figures 5a-5d. Ledit premier chemisage $6_1$ est maintenu en forme de haricot par un dispositif à dépression $10_2$, au sein d'un chariot motorisé 10 muni de roulettes de guidage $10_1$, puis introduit depuis une extrémité $3_1$, $3_2$ de la rame pour atteindre 12m plus loin la soudure conventionnelle $4_1$ effectuée en atelier. Le chariot motorisé 10 est muni d'une caméra vidéo non représentée permettant à l'opérateur d'ajuster la position du premier chemisage $6_1$ de manière à ce qu'il chevauche ladite première soudure $4_1$ d'atelier. Le dispositif à dépression $10_2$ est alors relâché et le premier chemisage reprend alors sa forme cylindrique. Le chariot 10 est alors extrait et est remplacé par un ballon cylindrique pressurisé, de la même manière que pour le second chemisage $6_2$.

Sur la figure 3, on a représenté une rame 3a, 3b composée de l'assemblage par soudage à l'acier au carbone des extrémités des éléments unitaires de conduite 2a et 2b entre eux, 2b et 2c entre eux et 2c et 2d entre eux.

Les éléments unitaires terminaux de la rame 3a,3b, à savoir les éléments unitaires de conduite 2a et 2c présentent une première extrémité $2_1$ destinée à être assemblée par soudage à l'alliage anti corrosion inconel 625 avec une autre première extrémité $2_1$ d'élément unitaire de conduite terminale d'une autre rame.

Sur la figure 3a, on a représenté la mise en place du premier chemisage $6_1$ chevauchant et protégeant le premier soudage $4_1$ contre la corrosion et aussi contre la fatigue, la surface interne des extrémités des éléments unitaires de conduite à souder par une première soudure à l'acier au carbone $4_1$ étant traitée par sablage pour améliorer le collage des premiers chemisages $6_1$.

Sur la figure 3b, on a représenté la première zone de revêtement anti corrosion 5 de longueur $l_1$ en alliage inconel 625 à ladite première extrémité $2_1$ de l'élément de conduite terminale 2a-2d correspondant aux extrémités $3_1$, $3_2$ d'une rame 3a-3b. La ligne de contact $5_1$ entre le revêtement 5 et la partie courante en acier de la surface interne de l'élément de conduite adjacente à la première zone de revêtement 5. Cette ligne de contact $5_1$ est revêtue d'un second chemisage $6_2$ qui s'étend vers l'autre extrémité $2_2$ de l'élément de conduite terminale 2a-2d d'une longueur $l_3$ de manière à éloigner suffisamment la partie du revêtement anti corrosion 5 non chemisée et donc possiblement en contact avec l'eau véhiculée par la conduite et la partie courante en acier au carbone $5_3$ non revêtue dudit second chemisage $6_2$ à l'autre extrémité dudit second chemisage $6_2$ pour éviter l'effet de corrosion ou effet de pile lorsqu'elles sont en contact avec l'eau véhiculée dans la conduite.

Sur les figures 7b et 7c, on a présenté effectivement l'approche puis le second soudage avec un alliage anti corrosion $4_2$ entre les extrémités $3_1$, $3_2$ de respectivement deux rames 3b et 3a correspondant aussi aux dites premières extrémités $2_1$ des éléments unitaires de conduite terminaux, respectivement 2d et 2a, des rames respectives 3a et 3b, la rame 3a étant déjà assemblée à son extrémité $3_1$ avec la partie de la conduite déjà assemblée et en cours de pose sur la tour de pose en J 21, tandis que son autre extrémité $3_2$ est en cours d'approche avec l'extrémité $3_1$ de la nouvelle rame 3b en cours d'assemblage sur la figure 7b et soudée $4_2$ sur la figure 7c.

Pour des éléments unitaires de longueur de 6 ou 12m et des rames de 24 à 48m avec des diamètres de 150 à 600mm et des épaisseurs de conduite de 10 à 35mm, on met en oeuvre les longueurs suivantes :

- des premières longueurs $l_1$ de revêtement anti corrosion 5, de 150 à 250mm,

- des premiers chemisages $6_1$ de longueur $l_0$ de 200 à 300mm,
- des seconds chemisages $6_2$ de longueur $l_2+l_3$ de 1000 à 2500mm avec $l_2$= 10 à 100mm, de préférence 30 à 60mm de chevauchement sur le revêtement, et $l_3$ de 990 à 2400mm, de préférence de 1500 à 2000mm de chevauchement sur la partie courante en acier de la surface interne de l'élément de conduite adjacente au revêtement 5, et
- lesdits seconds chemisages démarrant suffisamment loin de l'extrémité à souder $2_1$ des éléments unitaires de conduite terminaux 2a-2b pour éviter que lesdits seconds chemisages ne se dégradent lors du soudage des rames entre elles avec $l_4$ de 100 à 150mm en pratique, et.
- l'épaisseur desdits revêtements 5 est de 2 à 5mm, et
- l'épaisseur desdits premier et second chemisages est de 2 à 15mm, de préférence 3 à 5mm.

L'inconel de 625 présente la composition suivante : Cr 21,4-23%, Ni 63-65%, Mo 8,5-10%, Ta-Nb 3,45-4,15% et Ti <0,4%, Al<0,4%, Fe <5%.

On reste dans l'esprit de l'invention si l'on considère une conduite de type "pipe in pipe" comprenant deux conduites interne et externe coaxiales dans laquelle la conduite interne est assemblée par soudage est protection anti corrosion et fatigue selon la présente invention.

## Revendications

1. Procédé de réalisation de conduites sous marines (1) en acier destinées à véhiculer des fluides corrosifs et notamment de l'eau comprenant les étapes dans lesquelles :

   1) on réalise en atelier à terre l'assemblage par des premiers soudages ($4_1$) des extrémités respectives d'au moins 2 éléments unitaires de conduite (2a-2d) pour former des rames (3a-3b) de conduite, et
   2) on réalise en mer à partir d'un navire de pose (20) l'assemblage par des seconds soudages ($4_2$) des extrémités respectives de dites rames (3a-3b) pour former une dite conduite, **caractérisé en ce que** :

   - à l'étape 1), lesdites rames sont réalisées à partir d'au moins 2 éléments unitaires de conduite terminaux (2a, 2d) comprenant chacun une première extrémité ($2_1$) destinée à constituer une des deux extrémités ($3_1$,$3_2$) d'une dite rame, un revêtement anti corrosion (5) en acier inoxydable ou alliage résistant à la corrosion, de préférence un alliage base nickel, s'étendant sur la surface interne en acier au carbone de chaque dit élément unitaire de conduite terminal sur une première longueur (11) d'au moins 4 fois, de préférence de 4 à 20 fois l'épaisseur de la paroi de la conduite, depuis ladite première extrémité ($2_1$) vers la deuxième extrémité ($2_2$) de l'élément unitaire de conduite terminal, la surface interne du reste ($5_2$) de chaque élément unitaire de conduite terminal jusqu'à sa deuxième extrémité ($2_2$) étant constituée d'un acier au carbone non revêtu d'un dit acier inoxydable ou alliage résistant à la corrosion, et lesdites deuxièmes extrémités étant assemblées par des premiers soudages à l'acier au carbone ($4_1$), et

- avant l'étape 2), on réalise au moins un premier chemisage partiel ($6_1$) de la surface interne de ladite rame à l'aide respectivement d'au moins une enveloppe tubulaire (7) en matériau plastique souple de type liner que l'on applique contre ladite surface interne de la rame, chaque dit premier chemisage ($6_1$) recouvrant chaque dit premier soudage ($4_1$) en acier au carbone entre les extrémités respectives des éléments unitaires de conduite d'une même rame dont la surface interne est constituée d'un même acier au carbone non revêtu d'un dit acier inoxydable ou alliage résistant à la corrosion, et

- à l'étape 2), lesdites premières extrémités sont assemblées par des seconds soudages ($4_2$) consistant dans des soudages réalisés en même dit acier inoxydable ou en alliage résistant à la corrosion, de préférence un alliage base Nickel.

2. Procédé selon la revendication 1 **caractérisé en ce qu'**avant l'étape 2), de préférence avant l'étape 1), on réalise des seconds chemisages partiels à l'aide d'enveloppes tubulaires (7) en matériau plastique souple de type liner que l'on applique contre ladite surface interne de l'élément de conduite, les dits seconds chemisages recouvrant la ligne de contact ($5_1$) entre d'une part ledit revêtement anti corrosion (5) en acier inoxydable ou alliage résistant à la corrosion et d'autre part l'acier au carbone non revêtu d'un dit revêtement anti corrosion de la partie ($5_2$) de la surface interne de l'élément unitaire de conduite adjacente au dit revêtement anti corrosion et le dit second chemisage s'étendant d'une troisième longueur ($l_3$) de 2 à 10 fois le diamètre interne de la conduite à partir de ladite ligne de contact ($5_1$) par dessus la surface interne en acier au carbone de l'élément unitaire de conduite adjacente au dit revêtement anti corrosion (5) vers une deuxième dite extrémité ($2_2$).

**3.** Procédé selon la revendication 1 ou 2 **caractérisé en ce que**, à l'étape 1) on met en oeuvre au moins un élément unitaire de conduite intermédiaire (2b, 2c) entre les deux éléments unitaires de conduite terminaux (2a,2d) de la rame, ledit élément unitaire de conduite intermédiaire (2b,2c) comprenant une surface interne entièrement constituée d'un acier au carbone non revêtu d'un dit acier inoxydable ou alliage résistant à la corrosion, et chaque extrémité dudit élément unitaire de conduite intermédiaire étant assemblée par un dit premier soudage à l'acier au carbone soit à une dite deuxième extrémité d'un élément unitaire de conduite terminal (2a,2d) soit à une extrémité d'un autre élément unitaire de conduite intermédiaire.

**4.** Procédé selon la revendication 2 ou 3 **caractérisé en ce qu'**on réalise une pluralité de chemisages partiels de la surface interne de ladite rame à l'aide respectivement d'une pluralité d'enveloppes tubulaires (7) en matériau plastique (3a) précédemment assemblée à son autre extrémité $(3_1)$ à l'extrémité $(3_2)$ d'une conduite en cours de pose.

**5.** Procédé selon la revendication 1 à 4 **caractérisé en ce que** ledit premier revêtement s'étend sur une première longueur de 4 à 10 fois l'épaisseur de la paroi de la conduite à partir desdites extrémités à souder par desdits soudages anti corrosion $(4_2)$.

**6.** Procédé selon l'une des revendications 2 à 5 **caractérisé en ce que** ledit chemisage recouvrant ladite ligne de contact $(5_1)$ entre d'une part ledit revêtement (5) en acier inoxydable ou alliage résistant à la corrosion et d'autre part l'acier au carbone de la partie $(5_2)$ de la surface interne de l'élément unitaire de conduite adjacente à chaque dit revêtement anti corrosion (5), recouvre :

     - une partie dudit revêtement anti corrosion s'étendant à partir de la dite ligne de contact $(5_1)$ vers ladite première extrémité $(2_1)$ d'une deuxième longueur $(l_2)$ de 1/8 à 1 fois le diamètre interne de la conduite, et
     - une partie $(5_2)$ de la surface interne en acier au carbone adjacente audit revêtement anti corrosion s'étendant à partir de ladite ligne de contact $(5_1)$ vers ladite deuxième extrémité $(2_2)$ d'une troisième longueur (13) de 3 à 10 fois le diamètre interne de la conduite .

**7.** Procédé selon l'une des revendications 2 à 6 **caractérisé en ce qu'** on réalise desdits premiers chemisages s'étendant sur une longueur $(l_0)$ de 1/4 à 2 fois le diamètre interne de la conduite.

**8.** Procédé selon l'une des revendications 1 à 5 **caractérisé en ce que** à l'étape 2) on réalise l'assemblage par dit second soudage anti corrosion $(4_2)$ d'une extrémité $(3_1)$ d'une deuxième rame (3b) avec l'extrémité $(3_2)$ d'une première rame

     - lesdits chemisages comprennent une étape d'encollage $(7_1)$ de la surface externe desdites enveloppes (7) mises en forme tubulaire à l'extérieur de la conduite avant application contre la surface interne de la conduite, et
     - de préférence, lesdites surfaces externes des enveloppes sont préalablement traitées par un jet de plasma froid d'air $(7_2)$ avant encollage $(7_1)$, et
     - lesdites enveloppes sont introduites sous forme pliée (7a) à l'intérieur de la rame après encollage, pliées longitudinalement de manière à présenter en section transversale un contour en forme de haricot, puis introduites à l'aide d'un chariot (10) à l'intérieur de la conduite dans laquelle elles sont remises en forme tubulaire, par expansion radiale et plaquage de la surface externe de chaque enveloppe contre la surface interne de la conduite, de préférence par gonflage sous pression d'un ballon cylindrique de longueur supérieure à celle de ladite enveloppe, préalablement inséré à l'intérieur de ladite enveloppe.

**9.** Procédé selon l'une des revendications 1 à 8 **caractérisé en ce que** la réalisation d'un dit revêtement anti corrosion comprend :

     - l'alésage (9) de la surface interne sur une certaine profondeur jusqu'à obtenir un fini brillant, et
     - le dépôt par torche plasma d'un dit acier inoxydable ou alliage anti corrosion sur une épaisseur supérieure à ladite profondeur de l'alésage, puis
     - le réalésage de la surface du dépôt de dit acier inoxydable ou alliage anti corrosion, pour aplanir sa surface au même niveau que la surface adjacente en acier au carbone non revêtue de dit acier inoxydable ou dit alliage résistant à la corrosion.

**10.** Procédé selon l'une des revendications 1 à 8 **caractérisé en ce que** la réalisation d'un dit revêtement anti corrosion comprend :

     - l'alésage (9) de la surface interne sur une certaine profondeur jusqu'à obtenir un fini brillant, et
     - le dépôt par placage par fusion par effet joule de feuillard d'un dit acier inoxydable ou alliage anti corrosion sur une épaisseur supérieure à ladite profondeur de l'alésage, puis
     - le réalésage de la surface du dépôt de dit acier inoxydable ou alliage anti corrosion, pour aplanir sa surface au même niveau que la surface adjacente en acier au carbone non revêtue de dit acier inoxydable ou dit alliage résistant à la corrosion.

11. Procédé selon l'une des revendications 1 à 10 **caractérisé en ce que** ledit revêtement anti corrosion (5) et les dits seconds soudages anti corrosion (4$_2$) sont réalisés en acier résistant à la corrosion du type Inconel à haute élasticité résistant à la fatigue, de préférence en Inconel de grade 625.

12. Procédé selon l'une des revendications 1 à 11 **caractérisé en ce que** : souple de type liner que l'on applique contre ladite surface interne de la rame de manière discontinue comprenant :

  - desdits premiers chemisages (6$_1$) recouvrant les premiers soudages(4$_1$) en acier au carbone entre deux éléments unitaires de conduite contigus (2a-2d) assemblés dans une même dite rame, et
  - deux dits seconds chemisages (6$_2$) recouvrant chaque ligne de contact (5$_1$) entre d'une part le revêtement (5) en dit acier inoxydable ou alliage résistant à la corrosion à chaque extrémité (3$_1$, 3$_2$) de la rame (3a-3b) et d'autre part l'acier au carbone de la partie (5$_2$) de la surface interne de l'élément unitaire de conduite adjacente à chaque dit revêtement anti corrosion (5).

13. Conduite sous marine de liaison fond-surface dont au moins une partie est obtenue par un procédé selon l'une des revendications 1 à 12.

14. Conduite sous marine de liaison fond-surface selon la revendication 13 **caractérisée en ce qu'**il s'agit d'une conduite caténaire (1) du type SCR s'étendant selon une configuration en forme de chaînette et dont au moins une partie (1$_1$) comprenant la zone en contact (50) avec le sol s'étendant sur au moins 100m, de préférence 200m au dessus du sol (40) a été assemblée par un procédé selon l'une des revendications 1 à 13, et **en ce qu'**elle comprend.

  - une pluralité de rames de conduites (3a-3b) assemblées entre elles à leurs extrémités (3$_1$, 3$_2$) par des dits seconds soudages anti corrosion (4$_2$) en acier inoxydable ou en alliage résistant à la corrosion,et constituées de dits éléments unitaires de conduites (2a-2d) assemblés entre eux par desdits premiers soudages (4$_1$) en acier au carbone,
  - les surfaces internes des extrémités (3$_1$, 3$_2$) desdites rames assemblées par dits seconds soudages comprenant desdits revêtements anticorrosion (5) en dit acier inoxydable ou alliage résistant à la corrosion de la surface interne en acier au carbone aux extrémités des éléments unitaires de conduites ou le cas échéant des rames soudées ensemble par un dit soudage en acier inoxydable ou en alliage résistant à la corrosion, ledit revêtement s'étendant depuis chaque dite extrémité sur une dite première longueur (l$_1$), et
  - desdits premiers chemisages (6$_1$) partiels à l'aide d'enveloppes tubulaires (7) en matériau plastique souple de type liner étant appliqués contre ladite surface interne de la conduite, lesdits premiers chemisages (6$_1$) recouvrant les dits premiers soudages (4$_1$) en acier au carbone entre deux éléments unitaires de conduite contigus assemblés dans une même dite rame.

15. Conduite sous marine de liaison fond-surface selon la revendication 14 pouvant être obtenue par le procédé de l'une des revendications 2 à 12 **caractérisée en ce qu'**elle comprend desdits seconds chemisages (6$_2$) partiels à l'aide d'enveloppes tubulaires (7) en matériau plastique souple de type liner appliqués contre ladite surface interne de la conduite, chaque dit second chemisage recouvrant chaque ligne de contact (5$_1$) entre d'une part un dit revêtement anti corrosion (5) et d'autre part l'acier au carbone de la partie (5$_2$) de la surface interne de l'élément unitaire de conduite adjacente à chaque dit revêtement anti corrosion , et chaque dit second chemisage s'étendant d'une troisième longueur (l$_3$).

16. Conduite sous marine de liaison fond-surface selon l'une des revendications 14 ou 15 pouvant être obtenue par le procédé de l'une des revendications 2 à 15 **caractérisée en ce qu'**elle comprend :

  - une pluralité de dits chemisages partiels de la surface interne de ladite rame constituée respectivement d'une pluralité d'enveloppes tubulaires (7) en matériau plastique souple de type liner appliqués par collage contre ladite surface interne de la rame de manière discontinue comprenant :
  - desdits premiers chemisages (6$_1$) recouvrant lesdits premiers soudages (4$_1$) en acier au carbone entre deux éléments unitaires de conduite contigus assemblés dans une même dite rame, et
  - deux dits seconds chemisages (6$_2$) recouvrant chaque ligne de contact (5$_1$) entre d'une part chaque dit revêtement anti corrosion (5) et, d'autre part l'acier au carbone de la partie (5$_2$) de la surface interne de l'élément unitaire de conduite adjacente à chaque dit revêtement.

17. Conduite selon l'une des revendications 13 à 16 **caractérisée en ce qu'**elle comprend une partie constituée par assemblage de 2 à 4 dites rames, chaque dite rame étant constituée de 2 à 4 dits éléments unitaires de conduite de 5 à 15 m de long.

## Claims

1. A method of making steel undersea pipes (1) designed to convey corrosive fluids and in particular water, the method comprising the steps consisting in:

   1) acting in a workshop on land to assemble together respective ends of at least two unitary pipe elements (2a-2d) by means of first welds ($4_1$) so as to form pipe strings (3a, 3b); and:
   2) acting at sea from a laying ship (20) to assemble together respective ends of said strings (3a, 3b) by means of second welds ($4_2$) so as to form a said pipe;

   said method being **characterized in that**:

   · in step 1), said strings are made from at least two end unitary pipe elements (2a, 2d), each of which has a first end ($2_1$) designed to constitute one of the two ends ($3_1$, $3_2$) of a said string, an anti-corrosion cladding (5) made of stainless steel or of a corrosion-resistant alloy, preferably an alloy based on nickel, extending over the inside surface made of carbon steel of each said end unitary pipe element over a first length ($\ell_1$) of at least 4 times the thickness of the wall of the pipe, and preferably in the range 4 times to 20 times said thickness of the wall of the pipe, from said first end ($2_1$) towards the second end ($2_2$) of the end unitary pipe element, the inside surface of the remainder ($5_2$) of each end unitary pipe element to its second end ($2_2$) being made of a carbon steel that is not clad with a said stainless steel or with a said corrosion-resistant alloy, and said second ends being assembled together by carbon-steel first welds ($4_1$) ; and
   · prior to step 2), at least one first partial lining ($6_1$) of the inside surface of said string is implemented by means of a tubular liner (7) made of a flexible plastics material that is applied against said inside surface of the string, each said first lining ($6_1$) covering each said carbon-steel first weld ($4_1$) between the respective ends of the unitary pipe elements of the same string whose inside surface is made of the same carbon steel not clad with a said stainless steel or with a said corrosion-resistant alloy; and
   · in step 2), said first ends are assembled together by second welds ($4_2$) consisting of welds performed with the same said stainless steel or with the same said corrosion-resistant alloy, preferably an alloy based on nickel.

2. A method according to claim 1, **characterized in that**, prior to step 2), and preferably prior to step 1), second partial linings are implemented by means of tubular liners (7) made of flexible plastics material that are applied against said inside surface of the pipe element, each of said second linings covering the line of contact ($5_1$) between firstly said anti-corrosion cladding (5) of stainless steel or of corrosion-resistant alloy and secondly the carbon steel that is not clad with a said anti-corrosion cladding of that portion ($5_2$) of the inside surface of the unitary pipe element that is adjacent to said anti-corrosion cladding, and said second lining extending over a third length ($\ell_3$) lying in the range twice the inside diameter of the pipe to 10 times the inside diameter of the pipe from said line of contact ($5_1$) over that inside surface made of carbon steel of the unitary pipe element that is adjacent to said anti-corrosion cladding (5) towards a second said end ($2_2$).

3. A method according to claim 1 or claim 2, **characterized in that**, in step 1), at least one intermediate unitary pipe element (2b, 2c) is implemented between the two end unitary pipe elements (2a, 2d) of the string, said intermediate unitary pipe element (2b, 2c) having an inside surface made entirely of carbon steel not clad with a said stainless steel or with a corrosion-resistant alloy, and each end of said intermediate unitary pipe element being assembled by a said carbon-steel first weld either to a said second end of an end unitary pipe element (2a, 2d) or to an end of another intermediate unitary pipe element.

4. A method according to claim 2 or 3, **characterized in that** a plurality of partial linings are implemented on the inside surface of the string by means of respective ones of a plurality of tubular liners (7) made of a flexible plastics material that are applied against said inside surface of the string in discontinuous manner, the linings comprising:

   · said first linings ($6_1$) covering the carbon-steel first welds ($4_1$) between two contiguous unitary pipe elements (2a, 2d) assembled together in a same said string; and
   · two said second linings ($6_2$) covering each line of contact ($5_1$) between firstly the cladding (5) of said stainless steel or of said corrosion-resistant alloy at each end ($3_1$, $3_2$) of the string (3a, 3b) and secondly the carbon steel of that portion ($5_2$) of the inside surface of the unitary pipe element that is adjacent to each said anti-corrosion cladding (5).

5. A method according to any one of claims 1 to 4, **characterized in that** said first cladding extends over a first length lying in the range 4 times the thickness of the wall of the pipe to 10 times the thickness of the wall of the pipe from said ends to be welded together by said anti-corrosion welds ($4_2$).

6. A method according to any one of claims 2 to 5, **characterized in that** said lining covering said line of contact ($5_1$) between firstly the cladding (5) of stainless steel or of corrosion-resistant alloy and secondly the carbon steel of that portion ($5_2$) of the inside surface of the unitary pipe element that is adjacent to each said anti-corrosion cladding (5) covers:

    · a portion of said anti-corrosion cladding that extends from said line of contact ($5_1$) towards said first end ($2_1$) over a second length ($\ell_2$) lying in the range one eighth of the inside diameter of the pipe to the inside diameter of the pipe; and
    · a portion ($5_1$) of the inside surface made of carbon steel that is adjacent to said anti-corrosion cladding and that extends from said line of contact ($5_1$) towards said second end ($2_2$) over a third length ($\ell_3$) lying in the range 3 times the inside diameter of the pipe to 10 times the inside diameter of the pipe.

7. A method according to any one of claims 2 to 6, **characterized in that** each of said first linings is implemented to extend over a length ($\ell_0$) lying in the range one fourth of the inside diameter of the pipe to twice the inside diameter of the pipe.

8. A method according to any one of claims 1 to 5, **characterized in that**, in step 2), an end ($3_1$) of a second string (3b) is assembled by a said anti-corrosion second weld ($4_2$) to the end ($3_2$) of a first string (3a) that is previously assembled at its other end ($3_1$) to the end ($3_2$) of a pipe that is being laid.

9. A method according to any one of claims 1 to 8, **characterized in that** forming a said anti-corrosion cladding comprises:

    · boring (9) the inside surface over a certain depth until a shiny finish is obtained; and
    · using a plasma torch to deposit a said stainless steel or a said anti-corrosion alloy over a thickness greater than said depth of the bore; and then
    · re-boring the surface of the deposit of said stainless steel or of said anti-corrosion alloy so as to plane its surface down to the same level as the adjacent surface of carbon steel not clad with said stainless steel or with said corrosion-resistant alloy.

10. A method according to any one of claims 1 to 8, **characterized in that** forming a said anti-corrosion cladding comprises:

    · boring (9) the inside surface over a certain depth until a shiny finish is obtained; and
    · using melt plating by the Joule effect to deposit a strip of said stainless steel or of a said anti-corrosion alloy over a thickness greater than said depth of the bore; and then
    · re-boring the surface of the deposit of said stainless steel or of said anti-corrosion alloy so as to plane its surface down to the same level as the adjacent surface of carbon steel not clad with said stainless steel or with said corrosion-resistant alloy.

11. A method according to any one of claims 1 to 10, **characterized in that** said anti-corrosion cladding (5) and said anti-corrosion second welds ($4_2$) are implemented with corrosion-resistant steel of the Inconel type having high elasticity and being fatigue-resistant, preferably Inconel of grade 625.

12. A method according to any one of claims 1 to 11, **characterized in that** implementing said linings comprises a step of applying adhesive ($7_1$) over the outside surface of said liners (7) as tubular in shape outside the pipe before said liners are applied against the inside surface of the pipe, and

    - preferably, said outside surfaces of the liners are pre-treated with an air cold plasma jet ($7_2$) prior to application of the adhesive ($7_1$), and
    - said liners are inserted as folded (7a) into the string after application of the adhesive, said liners being folded longitudinally in such a manner as to present a cross-section having an outline that is kidney-shaped, and they are then inserted by means of a carriage (10) into the pipe inside which they are put back into their tubular shape, by radial expansion and by the outside surface of each liner being pressed against the inside surface of the pipe, preferably by inflation, under pressure, of a cylindrical bladder of length greater than the length of said liner, and previously inserted into said liner.

13. An undersea pipe for a bottom-to-surface link, at least a portion of which pipe is obtained by implementing a method according to any one of claims 1 to 12.

14. An undersea pipe for a bottom-to-surface link according to claim 13, **characterized in that** it is a catenary pipe (1) of the SCR type extending in a catenary configuration, at least one portion ($1_1$) of which pipe including the zone of contact (50) with the bottom and extending over at least 100 m, and preferably 200 m, over the bottom (40), has been assembled by implementing a method according to any one of claims 1 to 13, and **in that** it comprises:

· a plurality of pipe strings (3a, 3b) that are assembled together at their ends (3₁, 3₂) by said anti-corrosion second welds (4₂) of stainless steel or of corrosion-resistant alloy, and that are made up of said unitary pipe elements (2a-2d) assembled together by said first welds (4₁) of carbon steel;

· the inside surfaces of the ends (3₁, 3₂) of said strings assembled together by said second welds being provided with said anti-corrosion claddings (5) of stainless steel or of corrosion-resistant alloy that clad the carbon-steel inside surface at the ends of the unitary pipe elements or, where applicable, of the strings that are welded together by a said weld of stainless steel or of corrosion-resistant alloy, said cladding extending from each said end over a first length ($\ell_1$); and

· said first partial linings (6₁) implemented by means of tubular liners (7) made of a flexible plastics material being applied against said inside surface of the pipe, said first linings (6₁) covering said carbon-steel first welds (4₁) between contiguous unitary pipe elements that are assembled together in a same said string.

15. An undersea pipe for a bottom-to-surface link according to claim 14 that can be obtained by implementing the method of any one of claims 2 to 17, said undersea pipe being **characterized in that** it includes said second partial linings (6₂) that are implemented by means of tubular liners (7) made of flexible plastics material being applied against said inside surface of the pipe, each said second lining covering a respective line of contact (5₁) between firstly a said anti-corrosion cladding (5) and secondly the carbon steel of that portion (5₂) of the inside surface of the unitary pipe element that is adjacent to a respective one of said anti-corrosion claddings, and each said second lining extending over a third length ($\ell_3$).

16. An undersea pipe for a bottom-to-surface link according to any one of claims 14 or 15 that can be obtained by implementing the method of any one of claims 2 to 15, said undersea pipe being **characterized in that** it includes:

· a plurality of said partial linings implemented on the inside surface of said string and constituted by respective ones of a plurality of tubular liners (7) made of a flexible plastics material that are applied by adhesive bonding against said inside surface of the string in discontinuous manner, the linings comprising:

· said first linings (6₁) covering the carbon-steel first welds (4₁) between two contiguous unitary pipe elements assembled together in a same said string; and

· two said second linings (6₂) covering each line of contact (5₁) between firstly each said anti-corrosion cladding (5) and secondly the carbon steel of that portion (5₂) of the inside surface of the unitary pipe element that is adjacent to each said cladding.

17. A pipe according to any one of claims 13 to 16, **characterized in that** it includes a portion constituted by in the range 2 to 4 said strings that are assembled together, each said string being made up of in the range 2 to 4 unitary pipe elements that are of length in the range 5 m to 15 m.

**Patentansprüche**

1. Verfahren zur Herstellung von Unterwasserleitungen (1) aus Stahl, die dazu bestimmt sind, korrosive Fluide und insbesondere Wasser zu transportieren, umfassend die Schritte, bei denen:

1) in einer Werkstätte an Land das Verbinden der jeweiligen Enden von wenigstens zwei einzelnen Leitungselementen (2a-2d) durch erste Schweißnähte (4₁) vollzogen wird, um Leitungsstränge (3a-3b) zu bilden, und

2) im Meer, von einem Verlegungsschiff (20) aus, das Verbinden der jeweiligen Enden von genannten Strängen (3a-3b) durch zweite Schweißnähte (4₂) vollzogen wird, um eine Leitung zu bilden,

**dadurch gekennzeichnet, daß**:

- bei Schritt 1) die Stränge aus wenigstens zwei einzelnen endseitigen Leitungselementen (2a, 2d) hergestellt werden, die jeweils ein erstes Ende (2₁) umfassen, das dazu bestimmt ist, eines der beiden Enden (3₁, 3₂) eines Strangs zu bilden, wobei eine Korrosionsschutzbeschichtung (5) aus rostfreiem Stahl oder aus einer korrosionsbeständigen Legierung, vorzugsweise einer nikkelbasierten Legierung sich über die Kohlenstoffstahlinnenseite eines jeden einzelnen endseitigen Leitungselements, von dem ersten Ende (2₁) aus in Richtung des zweiten Endes (2₂) des einzelnen endseitigen Leitungselements, über eine erste Länge (l₁) von wenigstens dem Vierfachen, vorzugsweise dem Vier- bis Zwanzigfachen der Wandstärke der Leitung erstreckt, wobei die Innenseite des Rests (5₂) eines jeden einzelnen endseitigen Leitungselements bis zu seinem zweiten Ende (2₂) aus einem Kohlenstoffstahl besteht, der nicht mit einem rostfreiem Stahl oder einer korrosionsbeständigen Legierung beschichtet ist, und wobei die zweiten Enden durch erste Schweißungen mit Kohlenstoffstahl ($4_1$) verbunden werden, und

- vor Schritt 2) wenigstens eine erste Teilverkleidung ($6_1$) der Innenseite des Strangs mit Hilfe jeweils wenigstens eines rohrförmigen Mantels (7) aus flexiblem Kunststoff vom Typ Liner, der auf die Innenseite des Strangs aufgebracht wird, ausgebildet wird, wobei jede erste Verkleidung ($6_1$) jede erste Schweißnaht ($4_1$) aus Kohlenstoffstahl zwischen den jeweiligen Enden der einzelnen Leitungselemente eines gleichen Strangs bedeckt, deren Innenseite aus einem gleichen nicht mit einem rostfreien Stahl oder einer korrosionsbeständigen Legierung beschichteten Kohlenstoffstahl besteht, und

- bei Schritt 2) die ersten Enden durch zweite Schweißnähte ($4_2$) verbunden werden, die aus Schweißnähten bestehen, welche aus dem gleichen rostfreien Stahl oder einer korrosionsbeständigen Legierung, vorzugsweise einer nikkelbasierten Legierung ausgebildet werden.

2.  Verfahren nach Anspruch 1, **dadurch gekennzeichnet, daß** vor Schritt 2), vorzugsweise vor Schritt 1), zweite Teilverkleidungen mit Hilfe von rohrförmigen Mänteln (7) aus flexiblem Kunststoff vom Typ Liner, die auf die Innenseite des Leitungselements aufgebracht werden, ausgebildet werden, wobei die zweiten Verkleidungen die Berührungslinie ($5_1$) zwischen einerseits der Korrosionsschutzbeschichtung (5) aus rostfreiem Stahl oder einer korrosionsbeständigen Legierung und andererseits dem nicht mit einer Korrosionsschutzbeschichtung überzogenen Kohlenstoffstahl des Teils ($5_2$) der Innenseite des einzelnen Leitungselements, welcher der Korrosionsschutzbeschichtung benachbart ist, bedecken, und wobei die zweite Verkleidung sich um eine dritte Länge ($l_3$) vom Zwei- bis Zehnfachen des Innendurchmessers der Leitung, von der Berührungslinie ($5_1$) aus über die Kohlenstoffstahlinnenseite des einzelnen Leitungselements, die der Korrosionsschutzbeschichtung (5) benachbart ist, in Richtung eines zweiten Endes ($2_2$) erstreckt.

3.  Verfahren nach Anspruch 1 oder 2, **dadurch gekennzeichnet, daß** bei Schritt 1) wenigstens ein einzelnes Zwischenleitungselement (2b, 2c) zwischen die beiden einzelnen endseitigen Leitungselemente (2a, 2d) des Strangs eingesetzt wird, wobei das einzelne Zwischenleitungselement (2b, 2c) eine Innenseite aufweist, die vollständig aus einem nicht mit einem rostfreien Stahl oder einer korrosionsbeständigen Legierung überzogenen Kohlenstoffstahl besteht, und wobei jedes Ende des einzelnen Zwischenleitungselements durch eine erste Schweißung mit Kohlenstoffstahl entweder mit einem zweiten Ende eines einzelnen endseitigen Leitungselements (2a, 2d) oder mit einem Ende eines weiteren einzelnen Zwischenleitungselements verbunden wird.

4.  Verfahren nach Anspruch 2 oder 3, **dadurch gekennzeichnet, daß** eine Vielzahl von Teilverkleidungen der Innenseite des Strangs mit Hilfe jeweils einer Vielzahl von rohrförmigen Mänteln (7) aus flexiblem Kunststoff vom Typ Liner, die auf die Innenseite des Strangs diskontinuierlich aufgebracht werden, ausgebildet wird, umfassend:

    - erste Verkleidungen ($6_1$), welche die ersten Schweißnähte ($4_1$) aus Kohlenstoffstahl zwischen zwei einzelnen aneinandergrenzenden, verbundenen Leitungselementen (2a-2d) in einem gleichen Strang bedekken, und
    - zwei zweite Verkleidungen ($6_2$), die jede Berührungslinie ($5_1$) zwischen einerseits der Beschichtung (5) aus rostfreiem Stahl oder einer korrosionsbeständigen Legierung an jedem Ende ($3_1$, $3_2$) des Strangs (3a-3b) und andererseits dem Kohlenstoffstahl des Teils ($5_2$) der Innenseite des einzelnen Leitungselements, der jeder Korrosionsschutzbeschichtung (5) benachbart ist, bedecken.

5.  Verfahren nach Anspruch 1 bis 4, **dadurch gekennzeichnet, daß** sich die erste Beschichtung, von den durch Korrosionsschutzschweißnähte ($4_2$) zu verschweißenden Enden ausgehend, über eine erste Länge vom Vier- bis Zehnfachen der Wandstärke der Leitung erstreckt.

6.  Verfahren nach einem der Ansprüche 2 bis 5, **dadurch gekennzeichnet, daß** die Verkleidung, welche die Berührungslinie ($5_1$) zwischen einerseits der Beschichtung (5) aus rostfreiem Stahl oder einer korrosionsbeständigen Legierung und andererseits dem Kohlenstoffstahl des Teils ($5_2$) der Innenseite des einzelnen Leitungselements, der jeder Korrosionsschutzbeschichtung (5) benachbart ist, bedeckt, folgendes bedeckt:

    - einen Teil der Korrosionsschutzbeschichtung, der sich von der Berührungslinie ($5_1$) aus in Richtung des ersten Endes ($2_1$) um eine zweite Länge ($l_2$) erstreckt, die zwischen 1/8 und dem Einfachen des Innendurchmessers der Leitung beträgt, sowie
    - einen Teil ($5_2$) der Kohlenstoffstahlinnenseite, welcher der Korrosionsschutzbeschichtung benachbart ist und sich von der Berührungslinie ($5_1$) aus in Richtung des zweiten Endes ($2_2$) um

eine dritte Länge ($l_3$) erstreckt, die das Drei- bis Zehnfache des Innendurchmessers der Leitung beträgt.

7. Verfahren nach einem der Ansprüche 2 bis 6, **dadurch gekennzeichnet, daß** erste Verkleidungen ausgebildet werden, die sich über eine Länge ($l_0$) erstrecken, die zwischen 1/4 und dem Zweifachen des Innendurchmessers der Leitung beträgt.

8. Verfahren nach einem der Ansprüche 1 bis 5, **dadurch gekennzeichnet, daß** bei Schritt 2) das Verbinden - durch eine zweite Korrosionsschutzschweißnaht ($4_2$) - eines Endes ($3_1$) eines zweiten Strangs (3b) mit dem Ende ($3_2$) eines ersten Strangs (3a), der zuvor an seinem anderen Ende ($3_1$) an das Ende ($3_2$) einer gerade verlegten Leitung angefügt wurde, vollzogen wird.

9. Verfahren nach einem der Ansprüche 1 bis 8, **dadurch gekennzeichnet, daß** die Ausbildung einer Korrosionsschutzbeschichtung umfaßt:

    - das Ausbohren (9) der Innenseite über eine bestimmte Tiefe bis zum Erhalt einer glänzenden Oberfläche und
    - das Auftragen mittels Plasmabrenner eines rostfreien Stahls oder einer korrosionsbeständigen Legierung über eine Dicke, die größer als die Tiefe der Bohrung ist, dann
    - das erneute Ausbohren der Oberfläche des Überzugs aus rostfreiem Stahl oder einer korrosionsbeständigen Legierung, um seine Oberfläche auf das gleiche Niveau wie die benachbarte, nicht mit rostfreiem Stahl oder einer korrosionsbeständigen Legierung überzogene Oberfläche aus Kohlenstoffstahl einzuebnen.

10. Verfahren nach einem der Ansprüche 1 bis 8, **dadurch gekennzeichnet, daß** die Ausbildung einer Korrosionsschutzbeschichtung umfaßt:

    - das Ausbohren (9) der Innenseite über eine bestimmte Tiefe bis zum Erhalt einer glänzenden Oberfläche und
    - das Aufplattieren durch Schmelzen mittels Joule-Effekt eines Bandes aus einem rostfreien Stahl oder einer korrosionsbeständigen Legierung über eine Dicke, die größer als die Tiefe der Bohrung ist, anschließend
    - das erneute Ausbohren der Oberfläche des Überzugs aus rostfreiem Stahl oder einer korrosionsbeständigen Legierung, um seine Oberfläche auf das gleiche Niveau wie die benachbarte, nicht mit rostfreiem Stahl oder einer korrosionsbeständigen Legierung überzogene Oberfläche aus Kohlenstoffstahl einzuebnen.

11. Verfahren nach einem der Ansprüche 1 bis 10, **dadurch gekennzeichnet, daß** die Korrosionsschutzbeschichtung (5) und die zweiten Korrosionsschutzschweißnähte ($4_2$) aus korrosionsbeständigem Stahl vom Typ hochelastischer, ermüdungsfester Inconel, vorzugsweise aus Inconel 625 gefertigt sind.

12. Verfahren nach einem der Ansprüche 1 bis 11, **dadurch gekennzeichnet, daß**:

    - die Verkleidungen einen Schritt zum Verleimen ($7_1$) der Außenseite der in Rohrform gebrachten Mäntel (7) außerhalb der Leitung vor Anlegen an die Innenseite der Leitung umfassen, und daß
    - vorzugsweise die Außenseiten der Mäntel vor dem Verleimen ($7_1$) mittels eines kalten Luft-Plasmastrahls ($7_2$) vorbehandelt werden, und daß
    - die Mäntel nach dem Verleimen in gefalteter Form (7a) in den Strang eingeführt werden, in Längsrichtung derart gefaltet werden, daß sie im Querschnitt eine bohnenförmige Kontur aufweisen, anschließend mit Hilfe eines Wagens (10) in die Leitung eingeführt werden, in der sie durch radiale Aufweitung und Drücken der Außenseite jedes Mantels gegen die Innenseite der Leitung, vorzugsweise durch Aufblasen unter Druck eines zylindrischen Ballons, der eine größere Länge als der Mantel aufweist und der zuvor in den Mantel eingeführt wird, wieder in Rohrform gebracht werden.

13. Unterwasserleitung zur Verbindung zwischen Grund und Oberfläche, von welcher wenigstens ein Teil mittels eines Verfahrens nach einem der Ansprüche 1 bis 12 erhalten wird.

14. Unterwasserleitung zur Verbindung zwischen Grund und Oberfläche, nach Anspruch 13, **dadurch gekennzeichnet, daß** es sich um eine aufgehängte Leitung (1) vom Typ SCR handelt, die sich in Kettenlinienform erstreckt und von der wenigstens ein Teil ($1_1$), welcher den mit dem Grund in Kontakt befindlichen Bereich (50) umfaßt, der sich über wenigstens 100 m, vorzugsweise 200 m oberhalb des Grundes (40) erstreckt, mittels eines Verfahrens nach einem der Ansprüche 1 bis 13 verbunden worden ist, und daß sie umfaßt:

    - eine Vielzahl von Leitungssträngen (3a-3b), die an ihren Enden ($3_1$, $3_2$) durch zweite Korrosionsschutzschweißnähte ($4_2$) aus rostfreiem Stahl oder einer korrosionsbeständigen Legierung untereinander verbunden sind und die von einzelnen Leitungselementen (2a-2d) gebildet sind, welche durch erste Schweißnähte ($4_1$) aus Kohlenstoffstahl untereinander verbunden sind,

- wobei die Innenseiten der Enden ($3_1$, $3_2$) der Stränge, die durch zweite Schweißnähte verbunden sind, Korrosionsschutzbeschichtungen (5) aus rostfreiem Stahl oder einer korrosionsbeständigen Legierung der Kohlenstoffstahlinnenseite an den Enden der einzelnen Leitungselemente oder gegebenenfalls der Stränge, die durch eine Schweißnaht aus rostfreiem Stahl oder einer korrosionsbeständigen Legierung verschweißt sind, umfassen, wobei die Beschichtung sich von jedem Ende aus über eine erste Länge ($I_1$) erstreckt, und

- wobei erste Teilverkleidungen ($6_1$) mit Hilfe rohrförmiger Mäntel (7) aus flexiblem Kunststoff vom Typ Liner auf die Innenseite der Leitung aufgebracht sind, wobei die ersten Verkleidungen ($6_1$) die ersten Schweißnähte ($4_1$) aus Kohlenstoffstahl zwischen zwei einzelnen aneinandergrenzenden, verbundenen Leitungselementen in einem gleichen Strang bedecken.

15. Unterwasserleitung zur Verbindung zwischen Grund und Oberfläche, nach Anspruch 14, die mittels des Verfahrens nach einem der Ansprüche 2 bis 12 erhalten wird, **dadurch gekennzeichnet, daß** sie zweite Teilverkleidungen ($6_2$) mit Hilfe von rohrförmigen Mänteln (7) aus flexiblem Kunststoff vom Typ Liner umfaßt, die auf die Innenseite der Leitung aufgebracht sind, wobei jede zweite Verkleidung jede Berührungslinie ($5_1$) zwischen einerseits einer Korrosionsschutzbeschichtung (5) und andererseits dem Kohlenstoffstahl des Teils ($5_2$) der Innenseite des einzelnen Leitungselements, welcher jeder Korrosionsschutzbeschichtung benachbart ist, bedeckt, und wobei jede zweite Verkleidung sich um eine dritte Länge ($I_3$) erstreckt.

16. Unterwasserleitung zur Verbindung zwischen Grund und Oberfläche, nach einem der Ansprüche 14 oder 15, die mittels des Verfahrens nach einem der Ansprüche 2 bis 15 erhalten werden kann, **dadurch gekennzeichnet, daß** sie umfaßt:

- eine Vielzahl von Teilverkleidungen der Innenseite des Strangs, jeweils bestehend aus einer Vielzahl von rohrförmigen Mänteln (7) aus flexiblem Kunststoff vom Typ Liner, die auf die Innenseite des Strangs diskontinuierlich aufgeklebt werden, umfassend:
- erste Verkleidungen ($6_1$), welche die ersten Schweißnähte ($4_1$) aus Kohlenstoffstahl zwischen zwei einzelnen aneinandergrenzenden, verbundenen Leitungselementen in einem gleichen Strang bedecken, und
- zwei zweite Verkleidungen ($6_2$), die jede Berührungslinie ($5_1$) zwischen einerseits jeder Korrosionsschutzbeschichtung (5) und andererseits dem Kohlenstoffstahl des Teils ($5_2$) der Innenseite des einzelnen Leitungselements, der jeder Beschichtung benachbart ist, bedecken.

17. Leitung nach einem der Ansprüche 13 bis 16, **dadurch gekennzeichnet, daß** sie einen Teil umfaßt, der durch Verbinden von 2 bis 4 Strängen gebildet ist, wobei jeder Strang aus 2 bis 4 einzelnen Leitungselementen mit einer Länge zwischen 5 und 15 m besteht.

EP 2 066 944 B1

FIG.1

EP 2 066 944 B1

**FIG.2**

FIG.3

FIG.3A

FIG.3B

FIG.4A

FIG.4B

FIG.4C

FIG.5D

FIG.5C

FIG.5B

FIG.5A

FIG.4D

FIG.4E

EP 2 066 944 B1

FIG.6A

FIG.6B

26

**FIG.7A**

**FIG.7C**

**FIG.7B**

EP 2 066 944 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6179523 B1
- FR 2564938 A1